# EUROPEAN PATENT SPECIFICATION

(11) **EP 3 355 028 B1**
(45) Date of publication and mention of the grant of the patent: **13.11.2019**
(21) Application number: 17153135.3
(22) Date of filing: 25.01.2017
(51) Int. Cl.: G01C 21/34, G06Q 10/00, G08G 1/00, G08G 1/005, H04W 4/02, G06Q 10/04

(54) **METHOD AND SYSTEM FOR MANAGING A FLEET OF RIDE-SHARING VEHICLES USING VIRTUAL BUS STOPS**
VERFAHREN UND SYSTEM ZUR VERWALTUNG EINER FLOTTE VON MITFAHR-FAHRZEUGEN MIT VIRTUELLEN BUSHALTESTELLEN
PROCÉDÉ ET SYSTÈME DE GESTION D'UNE FLOTTE DE VÉHICULES DE COVOITURAGE UTILISANT DES ARRÊTS DE BUS VIRTUELS

(43) Date of publication of application: 01.08.2018
(73) Proprietor: Via Transportation, Inc., New York 10024 (US)
(72) Inventor: RACAH, Yaron, Givataim (IL); SHEBA, Avishay, Tel Aviv (IL); SHOVAL, Oren, Jerusalem (IL); RAMOT, Daniel, New York, NY 10024 (US); MARCOVITCH, Shmulik, Kfar Saba (IL)
(74) Representative: Finnegan Europe LLP

(56) References cited:
- WO-A1-2016/209595
- US-A1- 2011 022 491
- US-A1- 2015 369 621
- Josh Constine: "Uber Is Now Testing "Suggested Pickup Points" | TechCrunch", , 8 July 2015 (2015-07-08), XP055391639, Retrieved from the Internet: URL:https://techcrunch.com/2015/07/08/uber -suggested-pickup-points/ [retrieved on 2017-07-18]

## Description

### FIELD OF INVENTION

The present invention is related to computer transportation systems and computer-implemented methods for managing a fleet of ride-sharing vehicles.

### BACKGROUND OF THE INVENTION

Typically, ride-sharing allows people to share rides to their destinations. US 2015/0369621 discloses a method and a system of variable bus stops across a bus route in a regional transportation network, according to one embodiment. A method of a bus server includes analyzing a current geospatial location of a mobile device responsive to a pick up request of a prospective bus passenger, associating a closest street intersection with the current geospatial location of the mobile device, and determining if a bus route traverses the closest street intersection associated with the current geospatial location of the mobile device. A message may be communicated to the mobile device based on the determination of whether the bus route traverses the closest street intersection. A bus associated with the bus route may be instructed to pick up the prospective bus passenger when the bus route traverses the closest street intersection associated with the current geospatial location of the mobile device. WO 2016/209595 discloses systems and methods for providing suggested locations for pick up and destination locations. Pick up locations may include locations where an autonomous vehicle can pick up a passenger, while destination locations may include locations where the vehicle can wait for an additional passenger, stop and wait for a passenger to perform some task and return to the vehicle, or for the vehicle to drop off a passenger. As such, a request for a vehicle may be received from a client computing device. The request may identify a first location. A set of one or more suggested locations may be selected by comparing the predetermined locations to the first location. The set may be provided to the client computing device. US 2011/0022491 discloses a system and method for financial transactions in a rideshare system. A rideshare environment with multiple rideshare transactions is maintained. Each rideshare transaction includes one or more participants. Bids are received from potential participants for a position in at least one of the rideshare transactions. At least one potential participant is assigned to one of the rideshare transactions based on one of the bids. https://techcrunch.com/2015/07/08/uber-suggested-pickup-points/ discloses the testing of a feature that suggests to a user where a pickup for an ordered ride should take place.

### SUMMARY OF THE INVENTION

Embodiments consistent with the present disclosure provide computer-implemented methods and systems for routing a rideshare vehicle to pick-up a plurality of users at a plurality of pick-up locations for transportation to a plurality of drop-off locations.

One aspect of the invention provides a method according to claim 1 for routing a rideshare vehicle, the method comprising: receiving from a mobile communications device of a user a request for a rideshare, wherein the request includes information associated with a current location of the user and a desired destination; identifying, based on current locations of multiple rideshare vehicles and the received request, a rideshare vehicle to pick-up the user; selecting, based on the current travel route of the rideshare vehicle, virtual bus stops for the identified rideshare vehicle, wherein the virtual bus stops include a pick-up location and a drop-off location for the user, and wherein a location of the selected virtual bus stop for picking-up the user differs from the current location of the user; calculating an expected arrival time for the user at the selected virtual bus stop: calculating an expected arrival time for the rideshare vehicle at the selected virtual bus stop and assigning the rideshare vehicle to pick up the user if the user's expected arrival time at the selected virtual bus stop precedes the expected arrival time of the rideshare vehicle at the selected virtual bus stop wherein the location of the selected virtual bus stop for picking-up the user differs from a location of another virtual bus stop selected for picking-up another user assigned to the rideshare vehicle.

Another aspect of the invention provides a system according to claim 14, comprising: a communications interface configured to: receive from a mobile communications device of a user a request for a rideshare, wherein the request includes information associated with a current location of the user and a desired destination; and at least one processor configured to implement the method of the invention.

The foregoing general description and the following detailed description are exemplary and explanatory only and are not restrictive of the claims.

### BRIEF DESCRIPTION OF THE DRAWINGS

The present disclosure can be further explained with reference to the attached drawings, wherein like structures are referred to by like numerals throughout the several views. The drawings shown are not necessarily to scale, with emphasis instead generally being placed upon illustrating the principles of the present disclosure. Therefore, specific structural and functional details disclosed herein are not to be interpreted as limiting, but merely as a representative basis for teaching one skilled in the art to variously employ different embodiments of the present disclosure.
FIG. 1 is a flowchart illustrating an exemplary method for routing a rideshare vehicle consistent with the disclosed embodiments.

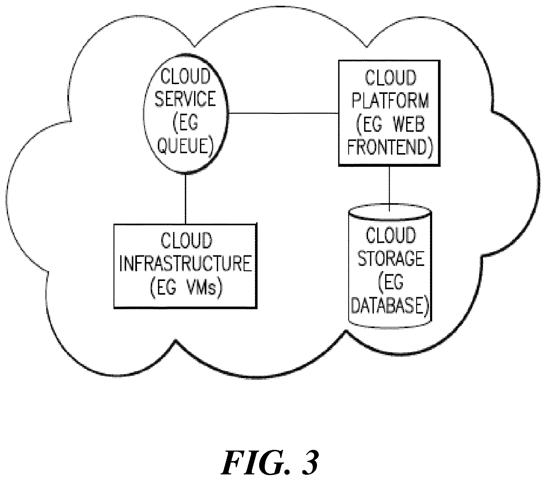

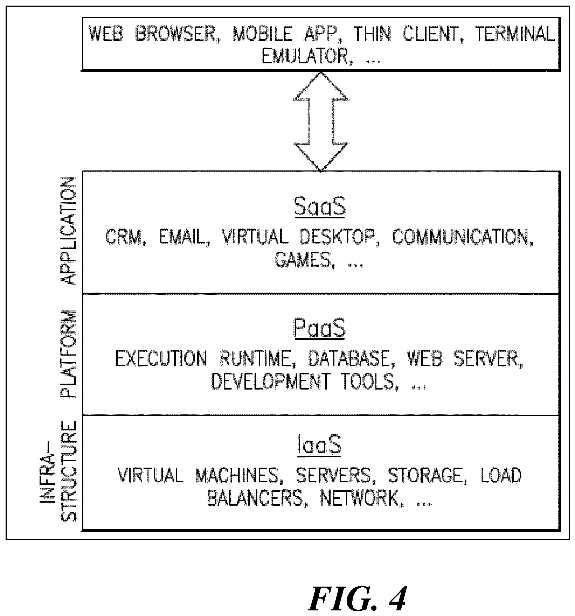

FIGS. 2A, 2B, 3, and 4 illustrate certain exemplary computer architecture in accordance with some principles of some embodiments of the present disclosure.
FIGS. 5, 6, 7 illustrate certain aspects of some embodiments of the present disclosure.

### DETAILED DESCRIPTION OF THE INVENTION

Among those benefits and innovations that have been disclosed, other objects and advantages of this disclosure will become apparent from the following description taken in conjunction with the accompanying figures. Detailed embodiments of the present invention are disclosed herein.

The exemplary computer transportation systems of the present disclosure can dynamically select virtual bus stops for users assigned to a rideshare vehicle. For example, when a user requests for a rideshare from a same location every day, the system may select every day to a different virtual bus stop as a pick-up location. One factor that the system may consider when dynamically selecting virtual bus stops is the current locations of the rideshare vehicles. Other factors that the system may consider when dynamically select the virtual bus stops are described below.

The system uses a grid of pick-up locations and drop-off locations so-called "virtual bus-stops". As used herein, the term "virtual bus stop" may include a location selected by the exemplary system as being safe for at least one passenger pick-up. Or a location selected by the exemplary system as being safe for at least one passenger drop-off (i.e., a location in which one or more users disembark the rideshare vehicle). For example, a virtual bus stop may be selected along main roads next to an existing bus station, an entrance to hotel, parking next to a business establishment, and more. The system may select virtual bus stops from a list of pre-identified locations stored in memory based on the type of rideshare vehicle being used. Specifically, a rideshare vehicle may include any machine used for transportation configured to carry more than one passenger, for example, a car, an SUV, a van, a minivan, a pickup, a trolley, a bus, etc. The process of identifying locations that can be used as virtual bus stops and the process of dynamically selecting the virtual bus stops for each rideshare request are discussed in greater detail below.

In some exemplary embodiments not falling within the scope of protection provided by the claims, the exemplary computer transportation systems of the present disclosure are configured to determine in which virtual bus-stops should passengers board and/or disembark, and thus, not requiring passengers to board and/or disembark at locations predetermined by a typical bus schedule (e.g., a schedule of M7 bus operated in Manhattan, New York). In some exemplary embodiments not falling within the scope of protection provided by the claims, the exemplary computer transportation systems of the present disclosure are further configured to determine which of the virtual bus-stops among the grid of virtual bus-stops are candidate for boarding and/or disembarking based on at least one of
- walking distance required with respect to specified origin and/or
- destination of the request, and/or
- the sum of the pickup and drop-off walking distances, and/or
- route considerations such as uncomfortableness when climbing/ getting down stairs, crossing bridges/tunnels or any other route segments which may be regarded as less comfortable for walking, and/or
- specific origin and destination locations that may impose limitations on maximal walking distances such as isolated neighborhoods, and/or
- passengers' related factors such as, but not limited to, disability, age dependence, and/or
- personal or global preferences such as, but not limited to, walking distance, expected time of arrival, ride duration, price, and their dependence on factors such as weather and or precipitation,
- any combination thereof.

In some exemplary embodiments not falling within the scope of protection provided by the claims, the exemplary computer transportation systems of the present disclosure are further configured to choose a single virtual bus-stop as a pick-up location and/or a single virtual bus-stop as a drop-off location (where the later may not be presented to passenger as it is not essential for rider-vehicle coordination, thus leaving more flexibility to change disembarking virtual bus-stops at a later stage during ride), where the selected virtual bus-stops are based on costs assigned to pick-up and drop-off virtual bus-stop pairs, and/ or their insertion order along already assigned pick-up and drop-off virtual bus-stops tasks (due to existing passengers in vehicle or passengers that were already assigned to vehicle).

In some exemplary embodiments not falling within the scope of protection provided by the claims, costs may include one or more of:
- duration each passenger spends in the vehicle,
- duration each passenger spends waiting for assign vehicle to arrive at the designated virtual bus stop,
- duration each passenger spends walking from origin to pick-up and from drop-off to destination,
- duration in which vehicle is held up (e.g., until final drop-off),
- costs related to ride segments in low-demand areas, and
- any combination thereof.

In some exemplary embodiments not falling within the scope of protection provided by the claims, the exemplary computer transportation system(s) of the present disclosure can include the use of mobile communications devices (e.g., smartphones, etc.) of users and server(s) in the distributed network environment, communicating over a suitable data communication network (e.g., the Internet, etc.) and utilizing at least one suitable data communication protocol (e.g., IPX/SPX, X.25, AX.25, AppleTalk, TCP/IP (e.g., HTTP), etc.). As used herein, the terms "users" and "passengers" refer interchangeably to individuals that use that system to request for a rideshare. In some embodiments, a plurality of passengers can be, but is not limited to, at least 100 passengers (e.g., but not limited to, 100-999 passengers), at least 1,000 passengers (e.g., but not limited to, 1,000-9,999 passengers), at least 10,000 passengers (e.g., but not limited to, 10,000-99,999 passengers), at least 100,000 passengers (e.g., but not limited to, 100,000-999,999 passengers), at least 1,000,000 passengers (e.g., but not limited to, 1,000,000-9,999,999 passengers), at least 10,000,000 passengers (e.g., but not limited to, 10,000,000-99,999,999 passengers), at least 100,000,000 passengers (e.g., but not limited to, 100,000,000-999,999,999 passengers), at least 1,000,000,000 passengers (e.g., but not limited to, 1,000,000,000-10,000,000,000 passengers).

In some exemplary embodiments not falling within the scope of protection provided by the claims, the exemplary computer transportation system(s) of the present disclosure are configured to communicate with at least one driver and at least one passenger, where the communication can be delivered to the at least one driver by use of at least one first graphical user interface (GUI) displayed by a computing device of the driver (e.g., smartphone), and/or where the communication can be delivered to the at least one passenger by use of at least one second GUI at a computing device of the passenger (e.g., smartphone). Alternatively, the rideshare vehicle may be an autonomous vehicles, i.e., vehicles that can pick-up and drop-off passengers without a driver. Accordingly, the exemplary computer transportation system(s) of the present disclosure may be configured to communicate with a plurality of transmitters embedded in autonomous vehicles that are a part of the fleet of ridesharing vehicles.

Consistent with the present disclosure, a system may be provided for routing a rideshare vehicle to pick up a plurality of users at a plurality of pick-up locations for transportation to a plurality of drop-off locations. The system includes a communications interface configured to receive from a mobile communications device of each of the plurality of users a request for a rideshare, wherein each request includes a current location of each user and a desired destination. The system further includes at least one processor configured to receive information from the communications interface and to: determine a travel route for the rideshare vehicle based on the received requests; assign each of the plurality of users to a virtual bus stop at a location different from at least some of the current locations, and wherein the assigned virtual bus stops for at least one user differs from an assigned virtual bus stop of at least another user; determine walking directions for each user from the current location of each user to each user's assigned virtual bus stop; and transmit the walking directions associated with each user to the mobile communications device of each user to thereby guide each user to the assigned virtual bus stop.

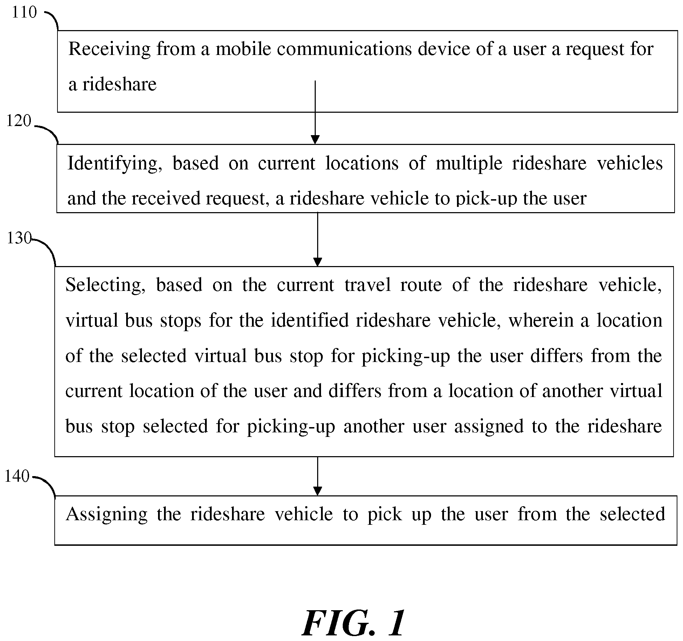

Fig. 1 is a flowchart showing an exemplary process for routing a rideshare vehicle, consistent with disclosed embodiments.

At step 110, a communications interface receives from a mobile communications device of a user a request for a rideshare, wherein the request includes information associated with a current location of the user and a desired destination. In some embodiments, the information associated with a current location of at least some of the plurality users includes GPS information or a user-requested pick-up location. The communications interface may include hardware and/or software that enable the system to communicate directly or indirectly with the plurality of users and with a plurality of rideshare vehicles. For example, the communications interface may include transmitting and receiving circuitry for a wired or wireless connection. In one embodiment, each request for a rideshare may further include a user-requested pick-up time. In this embodiment, the system may consider the user-requested pick-up time when assigning the plurality of users to virtual bus stops. For example, the computer transportation systems of the present disclosure may provide a pre-booking service in the ridesharing fleet. The service enables users to order in advance a ride by specifying a user-requested pick-up location, a desired destination, and a pick-up time interval (e.g., between 9:00-9:15), where the exact location of the assigned virtual bus stop and ETA may be provided few minutes before the arrival of the rideshare vehicle.

At step 120, a processing device identifies , based on current locations of multiple rideshare vehicles and the received request, a rideshare vehicle to pick-up the user. In one embodiment, the processing device identifies multiple rideshare vehicles to pick-up the user and provides the user with at least two ridesharing proposals, wherein each ridesharing proposal includes a differing estimated time for pick-up. Upon receiving input selection from the user, the system may assign the user to a rideshare vehicle associated with the selected ridesharing proposal. For example, the user may receive two suggested pick-up locations, one pick-up location may be closer but with a longer waiting time, the other pick-up location may be farther away but with less waiting time. The user can select the wanted pick-up location and a rideshare vehicle may be assigned accordingly. In some cases, for example, when the rideshare vehicle is delayed a replacement rideshare vehicle may be assigned to pick-up the user from the pick-up location.

At step 130, the processing device selects, based on the current travel route of the rideshare vehicle, virtual bus stops for the identified rideshare vehicle, wherein the virtual bus stops include a pick-up location and a drop-off location for the user, and wherein a location of the selected virtual bus stop for picking-up the user differs from the current location of the user and differs from a location of another virtual bus stop selected for picking-up another user assigned to the rideshare vehicle. Consistent with some embodiments of the disclosure, the processing device may dynamically select virtual bus stops such that the pick-up location may be less than a threshold distance from the user's current location and/or the drop-off location may be less than a threshold distance from the user's desired destination. For example, each virtual bus stop may be within a "reasonable walking distance" of the passenger-requested origin point and/or destination point. As used herein, the terms "threshold distance," "reasonable walking distance" and "reasonable walk" refer interchangeably to: (1) a distance between a passenger's designated origin point and a virtual bus stop, (2) a direction of travel of the road on which the requested destination point is located (e.g., but not limited to, a passenger standing on a road opposite the direction of travel may be more amenable to walking than a passenger standing on a road in the direction of travel), (3) identifying additional pickup and/or drop off points (i.e., pickup and/or drop off virtual bus stops) between a current location of passenger(s) and a destination location desired by passenger(s). In another example, when selecting the virtual bus stops, the processing device may give preferential treatment to virtual bus stops based on a subscription model from business establishment located proximate the virtual bus stops. For example, the processing device may prefer to select the virtual bus stop of the dropping-off user next to a certain store.

At step 140, the processing device assigns the rideshare vehicle to pick up the user from the selected virtual bus stop. The processing device assigns the rideshare vehicle to pick up the user from a selected virtual bus stop when the user is estimated to arrive at the selected virtual bus stop before the rideshare vehicle is estimated to arrives at the selected virtual bus stop. Assigning rideshare vehicles is this manner, enables the system to minimize the total waiting time of all of the users. As described in detail below, the process of selecting the virtual bus stops may include identify multiple locations suitable for pick-up and drop-off. In one embodiment, the process of selecting a virtual bus stop for pick-up includes calculating an expected arrival time for the user at the selected virtual bus stop, calculating an expected arrival time for the rideshare vehicle at the selected virtual bus stop, and assigning the rideshare vehicle to pick up the user if the user's expected arrival time at the selected virtual bus stop precedes the expected arrival time of the rideshare vehicle at the selected virtual bus stop.

In order to accurately calculate the expected arrival times for the rideshare vehicle at the respective virtual bus stops, the processing device may receive traffic data and account for the traffic when calculating the expected arrival time of the rideshare vehicle. In addition, to avoid a situation where the rideshare vehicle needs to wait to one of the user (e.g., if one of the user stopped to buy coffee on the way to the virtual bus stop) or if the user needs to wait too long for the rideshare vehicle (e.g., if the rideshare vehicle got stuck behind a garbage truck). The processing device may when the rideshare vehicle is assigned to the user, generate a first time-estimation for the rideshare vehicle to arrive at the selected virtual bus stop for picking-up the user; continuously receive location information from the rideshare vehicle prior to arrival at the selected virtual bus stop, to generate an updated time-estimation for the rideshare vehicle to arrive at the selected virtual bus stop for picking-up the user; cancel the assignment of the rideshare vehicle when the updated time-estimation differs from the first time-estimation by more than a predefined threshold; and reassigning another rideshare vehicle to pick-up the user from the selected virtual bus stop.

The processing device may predict an arrival time of each user at a respective virtual bus stop, and determine the travel route for the rideshare vehicle such that the rideshare vehicle would arrive at each virtual bus stop after the predicted arrival of an assigned user. The determined travel route may be points (e.g., A, B, C) that the rideshare vehicle needs to drive to, or the complete path between points. In one exemplary embodiment not falling within the scope of protection provided by the claims, the processing device may send the rideshare vehicle to pick-up a plurality of users headed to differing virtual bus stops, and determine based on a known passenger capacity of the rideshare vehicle, a capacity status of the rideshare vehicle. If the capacity of the rideshare vehicle is below the capacity threshold, the processing device may direct the rideshare vehicle along a first route resulting in a first set of arrival times for the users. But, if the capacity threshold is met, the processing device may direct the rideshare vehicle along a second route resulting in a second set of arrival times for the users, wherein the second set of arrival times are generally earlier than the first set of arrival times. In other words, the processing device may sub-optimizing individual routes to optimize the whole ridesharing fleet. For example, the at least one processor is further configured to sub-optimize at least some of the pick-up locations and the drop-off locations of the some users in order to minimize a total waiting time or travel time of all of the users in a given geographical area.

In some examples, the processing device may determine walking directions for the user from the current location of the user to the pick-up location and/or from the drop-off location to the desired destination. Thereafter, the processing device may transmit the walking directions to the mobile communications device of the user to thereby guide the user to and/or from the selected virtual bus stop. In other embodiments, the processing device may assign multiple users to a single virtual bus stop for pick-up and to different virtual bus stops for drop-off.

Consistent with other examples, the processing device may dynamically assign rideshare vehicles to pick-up users in a manner that maximizes an occupancy of the multiple rideshare vehicles. The processing device may also dynamically assign rideshare vehicles to pick-up users based on prediction that other requests for rideshare will be received from locations proximate the travel route of the rideshare vehicle. Additionally or alternatively, the processing device may also dynamically assign rideshare vehicles to pick-up users in a manner that minimizes at least one of the following quality of service factors: i) a first duration of time which each user spends in the rideshare vehicle; ii) a second duration of time which each user spends waiting for the rideshare vehicle to arrive at a respective virtual bus stop; iii) a third duration of time which each user spends walking to a respective virtual pickup bus stop; and iv) a fourth duration of time which each user spends walking to a respective desired destination.

In other exemplary embodiments not falling within the scope of protection provided by the claims, assigning a ride to an available vehicle includes at least one of the following activities: (1) determining a virtual bus stop for the new passenger's pickup, within reasonable walking range of the passenger-requested point of origin, (2) determining a virtual bus stop for the new passenger's drop off, within reasonable walking range of the passenger-requested destination, (3) adjusting the drop off points for passengers assigned to a vehicle, where the drop off points may only be adjusted and where pickup points are unchangeable once the exemplary computer transportation system delivers the pickup point to the passenger), (4) determining an order of pickups and drop offs, (5) determining a route between pickup and drop off points, or any combination thereof.

In an exemplary embodiment not falling within the scope of protection provided by the claims, the processing device may determine a drop-off location the user, and readjusting, during a ride of the rideshare vehicle, the determined drop-off location when the ridesharing vehicle is assigned to an additional user. Specifically, a system may be provided for managing a fleet of ridesharing vehicles. The system may comprise a communications interface configured to: receive ride requests from a plurality of users, wherein each ride request includes a current location and a desired destination; and receive from a plurality of communication devices associated with a plurality of ridesharing vehicles indications of current locations of the plurality of ridesharing vehicles. The system also includes at least one processor configured to: assign, based on the received ride requests and the received status reports, the plurality of users to the plurality of ridesharing vehicles; determine a pick-up location for each user assigned to a ridesharing vehicle, wherein the pick-up location differs from the current location for at least some of the plurality of users; determine a drop-off location for each user assigned to the ridesharing vehicle, wherein the drop-off location differs from the desired destination; and readjust, during a ride of the ridesharing vehicle, a drop-off location for at least one user when an additional user is assigned to the ridesharing vehicle. In one embodiment, before readjusting, the at least one processor may determine whether at least one of a walking distance and a walking time to the desired destination of the at least one user is within a threshold.

In some examples, the threshold distance (or the "reasonable walking distance") may be determined in real-time based on at least one of a weather condition, an overall system demand, and a detour duration for other users of the rideshare vehicle. For example, the reasonable walking distance in a worm sunny day may be 500 meters and on a cold rainy day may be 100 meters. In addition, the threshold distance (or the "reasonable walking distance") may be user specific. For example, the reasonable walking distance for a twenty years old user may be much higher than the reasonable walking distance for a seventy years old user. The system may store information about each user (e.g., age, physical disabilities, preferences, etc.) and use this information when determining the threshold distance for the users. In addition, the threshold distance may be based on user preferences with respect to minimizing vehicle ETA, minimizing walking distance, minimizing riding duration in the choice of virtual bus-stops.

### Exemplary calculations of the Reasonable Walk

As used herein, the term "absolute walk" refers to an actual walking distance to a virtual bus stop, which can be calculated for example by a map containing walking paths in a digital form or through geometrical measures such as Euclidian distance or, for example, but not limited to, Manhattan (L1) distance.

As used herein, the term "additional walk," as used herein, refers to an amount of "unnecessary" walking to a virtual bus stop, i.e., the distance beyond the distance to the nearest natural relevant alternative.

In some exemplary embodiments not falling within the scope of protection provided by the claims, a reasonable walk can range from, e.g., but not limited to, 1 - 300 meters. In some exemplary embodiments not falling within the scope of protection provided by the claims, a reasonable walk can range from, e.g., but not limited to, 1 - 250 meters. In some exemplary embodiments not falling within the scope of protection provided by the claims, a reasonable walk can range from, e.g., but not limited to, 1 - 200 meters. In some exemplary embodiments not falling within the scope of protection provided by the claims, a reasonable walk can range from, e.g., but not limited to, 1 - 150 meters. In some exemplary embodiments not falling within the scope of protection provided by the claims, a reasonable walk can range from, e.g., but not limited to, 1 - 100 meters. In some exemplary embodiments not falling within the scope of protection provided by the claims, a reasonable walk can range from, e.g., but not limited to, 1 - 50 meters. In some exemplary embodiments not falling within the scope of protection provided by the claims, a reasonable walk can range from, e.g., but not limited to, 50 - 300 meters. In some exemplary embodiments not falling within the scope of protection provided by the claims, a reasonable walk can range from, e.g., but not limited to, 100 - 300 meters. In some exemplary embodiments not falling within the scope of protection provided by the claims, a reasonable walk can range from, e.g., but not limited to, 150 - 300 meters. In some exemplary embodiments not falling within the scope of protection provided by the claims, a reasonable walk can range from, e.g., but not limited to, 200 - 300 meters. In some exemplary embodiments not falling within the scope of protection provided by the claims, a reasonable walk can range from, e.g., but not limited to, 250 - 300 meters. In some exemplary embodiments not falling within the scope of protection provided by the claims, a reasonable walk can range from, e.g., but not limited to, 50 - 250 meters. In some exemplary embodiments not falling within the scope of protection provided by the claims, a reasonable walk can range from, e.g., but not limited to, 100 - 200 meters.

### Example of an absolute walk and an additional walk

In some exemplary embodiments not falling within the scope of protection provided by the claims, if the absolute walk to a first virtual bus stop is 200 meters, but there is a second virtual bus stop at 50 meters, the first virtual bus stop has an additional walk of 150 meters (i.e., 200 meters - 50 meters = 150 meters).

### Exemplary Rule(s) Utilized in Determining Virtual Bus Stops

For example, in an exemplary embodiment not falling within the scope of protection provided by the claims, of the exemplary computer transportation system of the present disclosure, the exemplary rule(s) utilized in determining virtual bus stops are provided below.

In some exemplary embodiments not falling within the scope of protection provided by the claims, for example, pickup and drop-off virtual bus stops can be regarded as natural virtual bus stops if they are along main roads. For example, the computer transportation systems of present disclosure are configured to recognize directed main roads based on "natural" and/or "nearest" criteria. For example, riders can be more amenable to walking when there would be no natural point (e.g., an existing main road (e.g., a central street in a town)) nearby. In some exemplary embodiment not falling within the scope of protection provided by the claims, pickup and drop-off virtual bus stops can be in the general direction of the ride, along main roads (i.e., a major road for any form of motor transport, (e.g., avenues in Manhattan, New York)). In some exemplary embodiments not falling within the scope of protection provided by the claims, drop-off virtual bus stops can be in any direction, and any road (except for example dead ends). In some exemplary embodiments not falling within the scope of protection provided by the claims, drop-offs that are on main roads along the rides direction can be counted as "nearest" for the purpose of determining the additional walk of other alternatives.

In same exemplary embodiments not falling within the scope of protection provided by the claims, pick-up virtual but stops can be also along cross streets and on main roads against ride direction. For example, the present disclosure allows for pick-ups which are not along the direction of ride in accordance with the detouring effect and/or increased wait time they impose on existing riders and/or riders that are already assigned to the same vehicle. Consequently, a particular vehicle can pick-up passengers during the same ride direction at the same or different points: along main road(s) in the direction of the ride, along cross-street(s), and points which are not the direction of ride (e.g., opposite side of a main road).

In some exemplary embodiments not falling within the scope of protection provided by the claims, the computer transportation systems of present disclosure are configured such that the absolute walk has a length of 50-500 meters (m). In some exemplary embodiments not falling within the scope of protection provided by the claims, the computer transportation systems of present disclosure are configured such that the absolute walk has a length of 300-400 m. In some exemplary embodiments not falling within the scope of protection provided by the claims, the computer transportation systems of present disclosure are configured such that the absolute walk has a maximum length of 360 m.

In some exemplary embodiments not falling within the scope of protection provided by the claims, the computer transportation systems of present disclosure are configured such that the additional walk has a length of 0-400 meters (m). In some exemplary embodiments not falling within the scope of protection provided by the claims, the computer transportation systems of present disclosure are configured such that the additional walk has a length of 150-250 m. In some exemplary embodiments not falling within the scope of protection provided by the claims, the computer transportation systems of present disclosure are configured such that the additional walk has a maximum length of 180m.

In some exemplary embodiments not falling within the scope of protection provided by the claims, the computer transportation systems of present disclosure are configured such that the sum of the absolute walk and the additional walk has a length of 50-900 m. In some exemplary embodiments not falling within the scope of protection provided by the claims, the computer transportation systems of present disclosure are configured such that the sum of the absolute walk and the additional walk has a length of 300-400 m. In some exemplary embodiments not falling within the scope of protection provided by the claims, the computer transportation systems of present disclosure are configured such that the sum of the absolute walk and the additional walk has a maximum length of 360m (this rules implies the previous two rules).

In some exemplary embodiments not falling within the scope of protection provided by the claims, the computer transportation systems of present disclosure are configured to determine the reasonable walking distance based, at least in part, on the absolute walk and the additional walk.

The exemplary rules should not be deemed limiting and other similarly suitable rules are being contemplated; moreover, not all rules but some rules can be utilized to determine locations of virtual bus stops. For example, boarding virtual bus-stops can be treated the same as disembarking virtual bus-stop, where only points on suitably directed main roads can be natural but-stops, and riders are more amenable to walking when there's no natural point nearby.

### Examples using the Rules:

The following examples of some exemplary embodiments not falling within the scope of protection provided by the claims of the exemplary computer transportation system of the present disclosure are based on using the exemplary computer transportation system in Manhattan, New York, U.S.A. However, these examples are illustrative and not restrictive, and may be applied to any city or community.

### 1. Origin on 46th and 10th, going uptown:

For example, in an exemplary embodiment not falling within the scope of protection provided by the claims of the exemplary computer transportation system of the present disclosure, since 10th Avenue goes uptown, there's a virtual bus stop near the origin (0-40m, depending on exact point of origin). 11th Avenue is 270m away from 10th, and can also be used for uptown pickups. However, the "additional walk" to 11th is calculated relative to the walk to the nearest virtual bus stop (on 10th), and is above 180m, so 11th Avenue would not be considered in this example. A 1-2 block walk is allowed along 10th if the car's route requires it (at 80m per block, it's less than 180m of additional walk).

### 2. Origin on 80th and 1st, going downtown:

For example, in an exemplary embodiment not falling within the scope of protection provided by the claims of the exemplary computer transportation system of the present disclosure, 1st Avenue goes uptown, so virtual bus stops along 1st avenue are not considered for rides going downtown. This means that the nearest virtual bus stops are on York and 2nd (220m and 235m from 1st, respectively). These are within the 360m limit. They're also within the 180m additional walk limit, since there's no closer virtual bus stop. The additional walk for York is 0m (it's the nearest stop) and the additional walk for 2nd is 15m (because it's 15m more than York). Thus, both York and 2nd would be considered.

### 3. Origin on 80th and Madison, going downtown:

For example, in an exemplary embodiment not falling within the scope of protection provided by the claims of the exemplary computer transportation system of the present disclosure, again, Madison itself is not considered, because it's going uptown. 5th and Park (both 150m away) are the nearest relevant virtual bus stops, and are considered. Lexington is 160m beyond park. The absolute walk is 310m (which falls within the rules in this example). The additional walk is 160m (which falls within the rules in this example). However, the sum of the two measures is 460m, which is over 360m, so Lexington is not considered. Since passengers already are walking a block to the next avenue, they will not need to walk yet another "unnecessary" block.

### 4. Destination on 80th and 1st, coming from uptown:

In an exemplary embodiment not falling within the scope of protection provided by the claims of the exemplary computer transportation system of the present disclosure, the following example is similar to example #2; however, virtual bus stops on 1st Avenue (against the ride direction) and virtual bus stops on 80th (not a main road) would also be considered as such constraints may not be applicable to drop-offs. However, these "secondary" options would not count when figuring the additional walk of other points. This means that the primary points on York and 2nd (220m and 235m away) would also be considered. The passenger would be brought home (coming from uptown, making a detour back to 1st) if possible, but the passenger would walk from 2nd or York if there are further drop-offs downtown.

### An illustrative example of determining a reasonable passenger route

According to one exemplary embodiment not falling within the scope of protection provided by the claims, the provided system has the ability to identify closures or congestions and to direct both a user (with walking directions) and a rideshare vehicle (with driving directions) to a pick-up location that circumvents the congestion.

Specifically, a system for automatically navigating a vehicle-for-hire and a prospective passenger to a remote pick-up location to avoid traffic congestion, is provided. The system includes a communications interface configured to: receive a ride request from a user, wherein the ride request includes a starting point and a desired destination; receive from a plurality of communication devices associated with a plurality of vehicles-for-hire indications of current locations of the plurality of vehicles-for-hire. The system also includes at least one processor configured to: receive real time traffic data, including information about at least one of street blockages and atypical congestion; identify an existence of an area of traffic obstruction in a vicinity of the user's starting point; select a vehicle-for-hire to pick up the user; identify a pick-up location, remote from the user's starting point, peripheral to the area of traffic obstruction; send to the user, via the communications interface, information about the pick-up location; send to the selected vehicle-for-hire, via the communications interface, driving directions to the pick-up location, wherein the driving directions substantially avoid the area of traffic obstruction.

In related exemplary embodiments not falling within the scope of protection provided by the claims, the at least one processor may select the pick-up location such that a path from a current location of the user to the pick-up location avoids the area of traffic obstruction. In one exemplary embodiment not falling within the scope of protection provided by the claims, the area of traffic obstruction is a region where traffic flow is slower than in an adjacent region. For example, the area of traffic obstruction is at least one of a road closure, a traffic jam, a parade, an accident, a public safety incident, and an infrastructure repair. The at least one processor may also be configured to receive the real time traffic data from an external source. The at least one processor is also configured to receive real time traffic data derived from communications devices in a plurality of vehicles. The at least one processor is further configured to use the traffic-related information to determine a drop-off location for the user, wherein the drop-off location differs from the desired destination. Moreover, the at least one processor is further configured to assign multiple users to the vehicle-for-hire, and wherein the at least one processor is configured to assign differing pick-up locations and differing drop-off locations to the plurality of users. In addition, the information about the pick-up location sent to the user includes walking directions to the pick-up location. For example, the at least one processor is configured to select the pick-up location, the walking directions and the driving directions so that the user arrives at the pick-up location before arrival of the vehicle-for-hire. The walking direction includes a map indicating a walking path to the pick-up location, and wherein the at least one processor is further configured to cause, on the map, an indication of the area of elevated traffic congestion. The indication may include an icon or words describing the traffic obstruction.

In some exemplary embodiments not falling within the scope of protection provided by the claims, the present disclosure includes computer transportation systems configured to determine a reasonable route from origin and destination locations. In some embodiments, an evaluation of a route to determine if the route is a reasonable route includes: (1) time, where time of the route is measured as about the same amount of time as the direct route (e.g., but not limited to, 5%, 10%, 15%, or 20% etc. longer in duration than the direct route) and/or (2) geometry, where the route increases only slightly (e.g. but not limited to, by 50m, 100m, 150m, 200m, etc.) geometrical detour(s) (e.g., but not limited to, traveling north 200m and then traveling back south again, leading a 200m ^{∗} 2 = 400m overall geometrical detour). For example, depending on traffic, a route that travels back and forth may still be shorter in duration than a geometrically direct route.

In some exemplary embodiments not falling within the scope of protection provided by the claims, the present disclosure includes computer transportation systems employing at least one routing algorithm which takes into account data from at least one of offline or real-time traffic data from at least one of external electronic data sources and/or internal data generated by the exemplary computerized transporting system of the present disclosure based on, for example but not limited to, a speed of vehicles being controlled.

In some exemplary embodiments not falling within the scope of protection provided by the claims of the current disclosure, the computer transportation systems of present disclosure are configured to determine, in real-time, a vehicle route by a time duration, such that the geometrical detour would not be preferred, if it results in a longer expected duration of the trip but only in a slightly shorter updated route.

In some exemplary embodiments not falling within the scope of protection provided by the claims of the current disclosure, the computer transportation systems of present disclosure are configured to dynamically determine, in real time, the passenger route with the continuously updatable virtual bus stops by a combination of time duration and demand factors. For example, a routing through high demand areas can be preferred. In some embodiments of the current disclosure, the computer transportation systems of present disclosure are configured to dynamically determine, in real time, the passenger route with the continuously updatable virtual bus stops by utilizing a combination of time duration and demand factors. For example, the computer transportation systems of present disclosure are configured to account for the demand only in case when vehicle(s) is (are) partially occupied

In some exemplary embodiments not falling within the scope of protection provided by the claims of the current disclosure, the computer transportation systems of present disclosure are configured to dynamically determine, in real time, the passenger route with the continuously updatable virtual bus stops by a combination of time duration, demand, and toll routes factors, such that routing through toll routes is not preferred unless it saves significant cost overall, and/or routing through toll routes is preferred only in case driver and/or passengers acceptance.

In some exemplary embodiments not falling within the scope of protection provided by the claims, the exemplary computer transportation systems of the present disclosure are further configured to assign a vehicle, among the vehicles connected to the computer transportation system, to a ride requested by a passenger. In some embodiments of the current disclosure, the computer transportation systems of present disclosure are configured to dynamically filter candidate vehicle(s) to include only those vehicles in which one or more of the following conditions apply:
- distance to requested origin shorter than a threshold (e.g., but not limited to 1km, 2km, 3km, 4km, etc.);
- expected time of arrival to a virtual but-stop closest to the origin is less than a threshold ( e.g., but not limited to 5, 10, 15, 20 minutes etc.,);
- a number of candidate vehicles do not exceed a threshold (e.g., but not limited to 10, 50, 100 , 150, 250, 500 vehicles etc.);
- location(s) where the ordering of candidate vehicle(s) are/is based on a distance and/or expected time of arrival (ETA).

In some exemplary embodiments not falling within the scope of protection provided by the claims of the current disclosure, the computer transportation systems of present disclosure are configured to dynamically assign a single vehicle among the candidate vehicles or among all vehicles to a passenger request, based on, but not limited on, at least one of: costs associated with boarding at virtual but-stops, costs associated with disembarking at virtual bus-stops, and a possible ordering with respect to existing tasks. In some embodiments of the current disclosure, the vehicle assigned to a request is the one with minimal associated cost, and/or minimal suggested ETA, and/or minimal associated ride duration, to each and/or all passengers, and any combination thereof. In some embodiment of the current disclosure, the computer transportation systems of present disclosure are configured to dynamically determine the vehicle to be assigned to a request according to at least one of:
- passenger's preference(s) such as, but not limited to, ride duration, ETA, price, etc.;
- maximum expected contribution to vehicle's profitability;
- maximal expected profitability associated with request;
- minimal cost, and
- any combination thereof, etc.

For example, in a scenario when the exemplary computer transportation system of present disclosure determines the presence of a vehicle supply constraint, the exemplary computer transportation system of present disclosure is configured to assign a vehicle according to maximum expected profitability associated with request, while otherwise, vehicle is chosen according to minimal cost.

### Exemplary Calculations for Meeting a Future Demand

In some exemplary embodiments not falling within the scope of protection provided by the claims, the system may use historical data to predict areas where future capacity may be required, and to pass by users awaiting rides in order to meet as yet unrealized demand. Specifically, a system may be provided for using historical ridesharing demand data associated with a geographical area to manage a fleet of ridesharing vehicles. The system includes a communications interface configured to receive requests for shared rides from a plurality of users. The system includes also memory configured to store the historical ridesharing demand data, wherein the historical ridesharing demand data is associated with past demand for ridesharing vehicles in the geographical area and includes past locations of prior users and times of demand by the prior users. The system further includes at least one processor configured to receive via the communications interface, a first request for a shared ride from a first user in the geographical area, the first request including information related to a first pick-up location of the first user and a first desired destination of the first user; receive via the communications interface, a second request for a shared ride from a second user in the geographical area, the second request including information related to a second pick-up location of the second user and a second desired destination of the second user; generate a common route for picking-up and dropping-off both the first user and the second user at locations proximate the respective first desired destination and second desired destination; assign the first user and the second user to a common ridesharing vehicle; generate directions for transmittal, via the communications interface, to a mobile communications device within the common ridesharing vehicle, for directing picking-up and dropping-off each of the first user and the second user; receive a third request for a shared ride from a third user in the geographical area, the third request including information related to a third pick-up location and a third desired destination, and wherein at least one of the third pick-up location and a trajectory toward the desired destination is proximate the common route enabling pick-up of the third user by the common ride-sharing vehicle; predict, based on the stored historical ridesharing demand data, that another request will be received for a rideshare proximate the common route; and direct the ridesharing vehicle in a manner that passes the third user without picking up the third user, to maintain capacity in the ridesharing vehicle in order to satisfy the predicted another rideshare request.

In related exemplary embodiments not falling within the scope of protection provided by the claims, the historical prediction data may include information about past demand for ridesharing vehicles in at least one of day of the week, month, season, weather condition, and holiday. In addition, the information related to a first pick-up location includes a current location of the first user, walking distance from the first-pick-up location. The at least one processor may further be configured, before directing the ridesharing vehicle in a manner that passes the third user, to assign another ridesharing vehicle to the third user and to determine that the another vehicle is predicted to deliver to third user to a destination within a threshold time limit. The at least one processor may further be configured to determine routes for a plurality of ridesharing vehicles based on the predicted future demand, or determine drop-off locations for the first and second users based on the predicted future demand.

For example, the system may assign a plurality of passengers (e.g., 2, 3, 4, 5, 6, etc.) to a vehicle by : selecting routes between virtual bus stops, where the virtual bus stops pass through at least one high demand area(s), and where the exemplary computer transportation systems of the present disclosure create "demand-point tasks", which are a plurality of points on a map, where each point of the plurality of points has a designated preference level, determined as detailed below, and where a distribution of (i) the plurality of points and (ii) the preference level of each of the plurality of points is based on a demand model, as detailed below.

In some exemplary embodiments not falling within the scope of protection provided by the claims, the exemplary computer transportation systems of the present disclosure are configured to assign a plurality of passengers (e.g., 2, 3, 4, 5, 6, 7, 8, etc.) to a vehicle to meet future demand, by: delivering instructions to each passenger of a plurality of passengers to travel a reasonable walking distance to a high demand area, where each vehicle of a plurality of vehicles move to a plurality of high demand areas (e.g., but not limited to, instructing each vehicle of a plurality of vehicles to move to an area close to each vehicle's current location), and spreading vehicles out between different high demand areas, in proportion to the demand in each high demand area.

### Demand PointTasks: Explanations and Illustrative Examples

As used herein, "Demand points" refer to sets of points through which every ride in a certain area (i.e., demand area) would have to pass.

For example, in an exemplary embodiment not falling within the scope of protection provided by the claims of the exemplary computer transportation system of the present disclosure, every ride going uptown from below 50th to above 50th cross st. in Manhattan, would have to cross 50th somewhere. This means that a set of demand points just below 50th is created, on each uptown-bound avenue (1st, 3rd, Park, Madison, 6th, 8th, 10th, West End). Whenever an uptown ride needs to cross 50th, a "demand-point task" is added to the car, in addition to the pickup and drop-off tasks for the various passengers. This demand-point task is invisible to the driver, but might affect routing choices._The demand-point task has several locations at which it can be resolved. In this example, the demand-point task could be resolved in any of the 8 uptown avenues, just below 50th. When the route for the car is built or modified, the exemplary computer transportation systems are configured to determine which of those locations the car will pass through.

For example, in an exemplary embodiment not falling within the scope of protection provided by the claims of the exemplary computer transportation system of the present disclosure, since the demand-point task needs to be resolved at one of the designated locations, the demand-point task prevents a route that goes around those locations. For example, when driving a Midtown pickup to an Upper East Side (UES) drop-off, the Franklin D. Roosevelt East River (FDR) Drive will not be used, as that prevents any further pickups for that car. Having to cross 50th (and some other streets) in a location from the designated set (which does not include FDR) prevents an FDR route from being built. In some embodiments of the current disclosure, the computer transportation systems of present disclosure are configured to ignore the demand-point tasks in cases when the vehicle occupancy is at least at a certain number (e.g., but not limited to, 1, 2, 3, etc. passengers present in the vehicle and/or e.g., but not limited to, 1, 2, 3, etc. empty seats are available). For example, in case of Manhattan, NYC, the exemplary computer transportation systems of present disclosure can be configured to allow the routing through the FDR would be allowed if there would be a sufficient number (exceeding a pre-determined number) of passengers inside the vehicle.

In some exemplary embodiments not falling within the scope of protection provided by the claims, each possible location for the demand-point task is assigned a cost based on the demand. For example, in the evening commute, there is increased demand from Midtown to UES, but that demand is centered around central Midtown (Park, Madison, and to a less extent 6th and 3rd). There is a smaller demand (i.e., fewer passengers that compared to, e.g., but not limited to, Midtown) in the peripheral avenues (1st, 8th, 10th, 11th). In this case, the exemplary computer transportation systems are configured to assign passengers located at the central avenues low costs, while the passengers located at the peripheral avenues would be assigned higher costs.

In some exemplary embodiments not falling within the scope of protection provided by the claims, when the exemplary algorithm-based engine calculates the possible routes, demand costs are taken into account, penalizing the peripheral avenues. For example, a route through a central avenue would have a higher likelihood of being chosen, even if the peripheral avenue is a few minutes faster (as long as the central avenue is compatible with the pickups and drop-offs for that car).

In some exemplary embodiments not falling within the scope of protection provided by the claims, when a car is full (so further demand is irrelevant) or close to be full, demand point tasks are ignored, and the exemplary computer transportation systems deliver instructions for the vehicle to travel the fastest route or according to combination of time and duration.

Therefore, the selected route for an individual vehicle may depend on variables other than routing based on time of arrival to improve the overall effectiveness of the fleet. Specifically, in one exemplary embodiment not falling within the scope of protection provided by the claims, a system is provided for managing a fleet of ridesharing vehicles. The includes a communications interface configured to receive ride requests from a plurality of users, wherein each ride request includes a starting point and a desired destination; and receive from a mobile communications device associated with a ridesharing vehicle, a current location of the ridesharing vehicle. The system further includes at least one processor configured to: in response to the ride requests, send the ridesharing vehicle to pick-up the plurality of users headed to differing destinations; determine based on a known passenger capacity of the ridesharing vehicle, a capacity status of the ridesharing vehicle; if the capacity of the ridesharing vehicle is below the capacity threshold, direct the ridesharing vehicle along a first route resulting in a first set of arrival times for the users; and if the capacity threshold is met, direct the vehicle along a second route resulting in a second set of arrival times for the users, wherein the second set of arrival times are generally earlier than the first set of arrival times. The capacity threshold may be one, two, three, four, or five persons less than a passenger-capacity of the rideshare vehicle.

In related exemplary embodiments not falling within the scope of protection provided by the claims, the system further includes memory for storing historical data of ridesharing demand, and wherein the at least one processor is configured to determine whether imminent demand is expected along an alternate route to the destinations and to send the ridesharing vehicle along the alternate route if imminent demand is expected along the alternate route. The second route may include a highway or a toll road. In addition, the at least one processor is further configured to select the first route when imminent demand is predicted an area near at least one drop-off location.

### Exemplary Algorithmic Calculations

In some exemplary embodiments not falling within the scope of protection provided by the claims, the transportation methods of the present disclosure include: routing calculations to identify the fastest route from A to B on a map by determining routes between a plurality of possible virtual bus stops for a plurality of passengers transported by a plurality of vehicles, where the calculation can result in between 100-100,000 routing queries per calculation(e.g., but not limited to, 1,000; 5,000; 10,000, etc.), and where routing calculation is calculated in real-time (e.g., from nanoseconds to 20 seconds; from microseconds to 20 seconds, from milliseconds to 20 seconds; from 1 second to 20 seconds).

In some exemplary embodiments not falling within the scope of protection provided by the claims, the transportation methods include defining a set of points on the map (e.g., but not limited to, 10 points, 100 points, 1,000 points, etc.), between which the routes are pre-calculated and stored (e.g., the driving times for each of the routes). In some embodiments, the passenger-entered points are calculated by: (i) using stored points from the set, (ii) calculating the driving time, and (iii) adjusting for the determined point. In some embodiments, each point of a set of points is a location reference having at least one identifying characteristic (e.g., but not limited to, gas stations, museums, restaurants, hotels, schools, theaters, etc.)

In some exemplary embodiments not falling within the scope of protection provided by the claims, the transportation methods of the present disclosure further include a selection calculation, where the selection calculation is performed by utilizing at least one algorithm, and where the at least one algorithm solves complex problems by recursively solving smaller problems of the same type, such as, but not limited to, routing and virtual but-stop and demand-point tasks selection discussed herein.

In some exemplary embodiments not falling within the scope of protection provided by the claims, the transportation methods of the present disclosure further include vehicle filtering to improve performance times, where the vehicle filtering includes performing a preliminary calculation regarding each vehicle of a plurality of vehicles, and filter each vehicle of a plurality of vehicles based on the geometrical correspondence between each vehicle's existing route and the new passenger request. In some embodiments, this initial calculation does not include the particulars of the road map or the distribution of virtual bus stops. In some exemplary embodiments not falling within the scope of protection provided by the claims, only vehicles that pass this initial calculation (i.e., filtering) are considered for assignment.

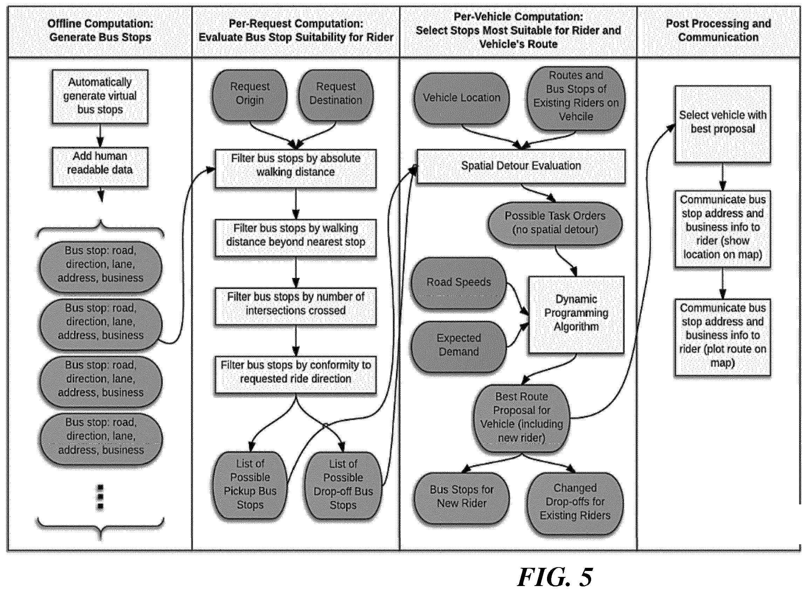

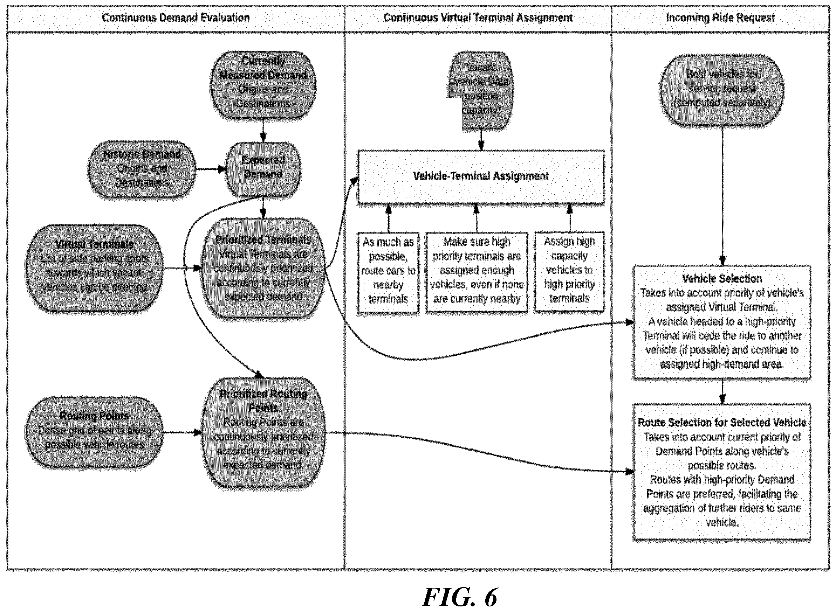

Figure 5 is a diagram illustrating an embodiment of the exemplary computer transportation system of the present disclosure, showing virtual bus stops. Figure 6 is a diagram illustrating an embodiment of the exemplary computer transportation system of the present disclosure, showing expected demand driven routing.

The present disclosure considers a situation where a ridesharing vehicle, already at capacity, is assigned another passenger. Even when expected capacity is electronically tracked through automated ridesharing requests, multiple passengers might enter a ridesharing vehicle when the system expects only one.

Specifically, an automated ridesharing dispatch system may be provided, the system may include a communications interface configured to electronically receive ride requests from a plurality of users, memory configured to store a capacity threshold for each of a plurality of ridesharing vehicles, and at least one processor. The at least one processor is configured to: process the ride requests received from the communications interface and to assign to a single ridesharing vehicle the plurality of users for pick up at a plurality of pick-up locations and for delivery to a plurality of drop-off locations; determine a route for the ridesharing vehicle; receive from at least one information capture appliance within the ridesharing vehicle, information indicative of a current number of passengers in the ridesharing vehicle; and determine whether to assign additional users to the ridesharing vehicle based on the received information from the information capture appliance.

In one exemplary embodiment not falling within the scope of protection provided by the claims, the at least one capture appliance includes at least one sensor configured to detect the current number of passengers in the ridesharing vehicle. In another embodiment, the at least one information capture appliance includes an image sensor. In another embodiment, the at least one information capture appliance includes a plurality of image sensors. In another embodiment, the at least one information capture appliance includes a plurality of pressure sensors associated with seats in the ridesharing vehicle. In another embodiment, the at least one information capture appliance includes an image sensor associated with a mobile communications device within the ridesharing vehicle. In this embodiment, the at least one information capture appliance includes at least one of a thermal sensor and a proximity sensor. In addition, the at least one information capture appliance short-range transceiver configured to determine the actual number of users entering the ridesharing vehicle by communicating with mobile devices of the users.

In other exemplary embodiments not falling within the scope of protection provided by the claims, the at least one processor may receive from the communications interface an actual number of individuals entering the ridesharing vehicle. The at least one processor may also receive from the communications interface an actual number of occupants in the ridesharing vehicle. As mentioned above the ridesharing vehicle may be an autonomous vehicle. The at least one processor may further be configured to determine a discrepancy between a number of users expected to enter the ridesharing vehicle and the actual number of passengers entering the ridesharing vehicle. The at least one processor may also be configured to change the route of the ridesharing vehicle in response to a detected discrepancy.

### Examples of Virtual Bus Stops

Table 1 illustrates an exemplary grid of virtual bus stops determined in accordance with principles of the present disclosure discussed herein.

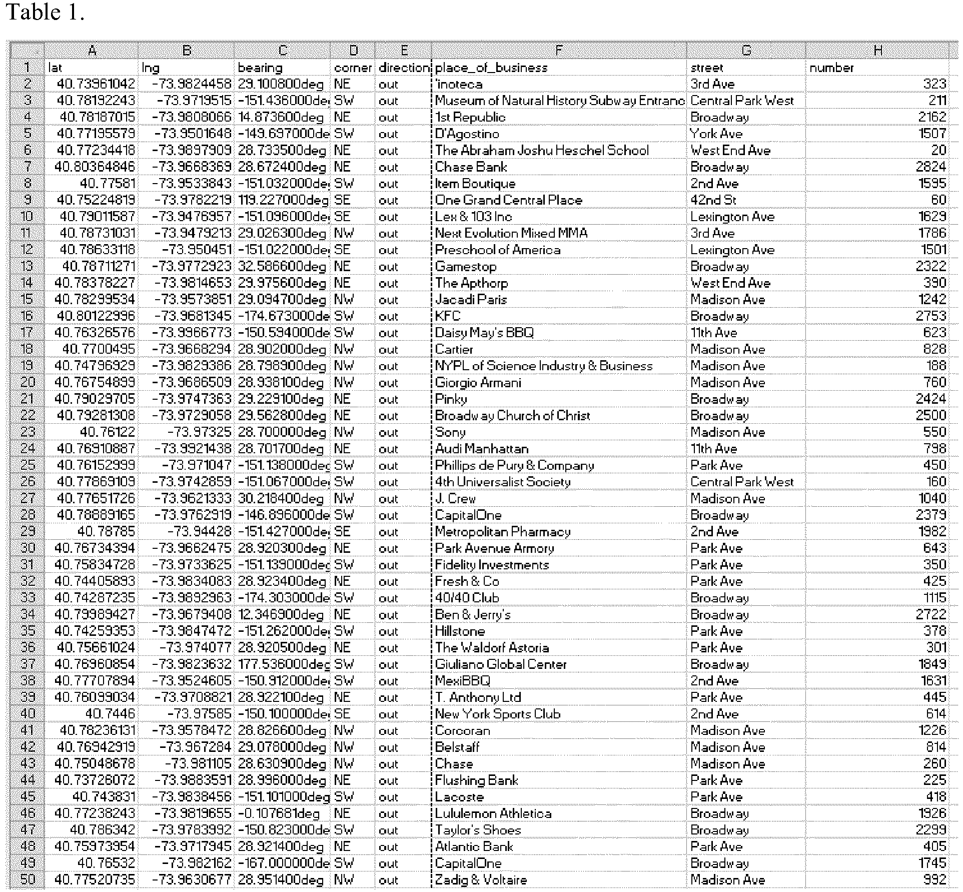

### Exemplary Dynamic Pre-Generation of Virtual Bus Stops

In some exemplary embodiments not falling within the scope of protection provided by the claims, a mechanism is provided for analyzing the maps of the other geographical areas and to automatically generate a list of pick-up and drop-off locations. Specifically, a computer readable medium for implementing image processing to automatically selecting a plurality of locations for virtual bus stops, is provided. The computer readable medium containing instructions that when executed by at least one processor cause the at least on processor to perform a method, comprising: receiving an input selection of a geographical area; accessing satellite map data defining roadways in the geographical area; accessing regulatory data including traffic regulations for the geographical area; accessing traffic pattern and traffic volume data on roads in the geographical area; accessing information that defines pedestrian walkways in the geographical area; undertaking image processing on the satellite data to define likely routes through the geographical area for satisfying common demand with ridesharing vehicles, wherein defining the likely routes is based on at least on one of the traffic pattern data, the traffic volume data, and the pedestrian walkway information; based on the definition of the likely routes, selecting locations for virtual bus stops along the likely routes, wherein the instructions cause the at least one processor to select virtual bus stops that are accessible to pedestrian traffic, and which enable vehicle pick-up; generating a list of virtual bus-stops for a fleet of ridesharing vehicles in the geographical area, wherein the generated list renders a majority of the virtual bus stops walking-accessible to a majority of a population of the geographical area in under ten minutes; enabling export of at least a portion of the generated list to a system for electronically receiving ridesharing requests from individuals, routing the individuals to virtual bus stops, and dispatching ridesharing vehicles to the virtual bus stops.

In related exemplary embodiments not falling within the scope of protection provided by the claims, the geographical area is a city with a population of at least 500,000 people, and the map data and the data defining pedestrian walkways includes satellite imagery of the geographical area. In addition, the method may further comprises using image processing to identify the virtual bus-stops, and/or accessing a database defining locations of business in the geographical area, and selecting virtual bus-stops located adjacent specific businesses. In other exemplary embodiments not falling within the scope of protection provided by the claims, the selection of at least one virtual bus-stop in a section of the geographical area takes into consideration a location of a virtual bus-stop at an adjacent section. The method may further comprise identifying locations for a plurality of virtual terminals, wherein a virtual terminal is a site where a ridesharing vehicle can park when awaiting a ridesharing assignment.

For example, each virtual bus stop of a plurality of virtual bus stops may be dynamically put at the beginning of every block, right after and/or right before a particular intersection. In some exemplary embodiments not falling within the scope of protection provided by the claims, the beginning of the block is used rather than the end of the block, because this gives the driver time to switch lanes after leaving the stop (based on the driver's route from the stop). In some exemplary embodiments not falling within the scope of protection provided by the claims, virtual bus stops on all roads are used, except e.g., but not limited to, dead ends. In some exemplary embodiments not falling within the scope of protection provided by the claims, a drop-off virtual bus stop can safely be chosen that is convenient for a passenger, even if it is not as accessible in general. In some exemplary embodiments not falling within the scope of protection provided by the claims, when additional passengers are added to the car, the drop-off of existing passengers may be dynamically adjusted in real-time to different virtual bus stop(s), according to, for example but not limited to, the best associated cost.

In some exemplary embodiments not falling within the scope of protection provided by the claims of the exemplary computer transportation systems of the present disclosure, after virtual bus stops are dynamically generated according to the above rules, the exemplary computer transportation systems can be configured to allow administrators of the exemplary computer transportation systems of the present disclosure to:
1. change and/or remove "bad" stops (no stopping, or no convenient access to sidewalk);
2. on one-way roads, identify stops that need to be moved to left side of street (because of bus lanes, sidewalk access, etc.);
3. add business information or additional useful information that would help drivers and passengers identify the correct rendezvous; and
4. any combination thereof.

### Illustrative Examples of Spatial Detour Prevention

The quality of user's experience in a ridesharing system is not simply a function of the arrival time. Rather, a complicate combination of factors other than the shortest time of arrival impacts user satisfaction. Backtracking, U-turns, traversing certain roads, and other driving maneuvers can negatively impact user satisfaction, even if resulting in the shortest arrival time. In order to improve user satisfaction a system for managing a fleet of ridesharing vehicles, is provided.

Consistent with some exemplary embodiments not falling within the scope of protection provided by the claims, the system may include a communications interface configured to receive ride requests from a plurality of users, wherein each ride request includes a starting point and a desired destination; and to receive from a plurality of communication devices associated with a plurality of ridesharing vehicles, indications of current locations of the plurality of ridesharing vehicles. The system may further include a memory configured to store a plurality of rules, in addition to a rule to select a shortest route for guiding a ridesharing vehicle, the plurality of rules including at least one of avoiding a route that includes a trajectory away from a user's desired destination, avoiding U-turns, avoiding two consecutive left turns, avoiding two consecutive right turns, and choosing a non-shortest route that avoids particular roadways. The system may also include at least one processor configured to: assign the plurality of users to a common ridesharing vehicle; determine a route for the ridesharing vehicle other than the shortest route, the route including a plurality of pick-up and drop-off locations associated with the starting points and desired destinations of the plurality of users, and wherein determining the route includes applying at least one of the rules other than the shortest route rule stored in memory; and direct the ridesharing vehicle along the determined route.

In related exemplary embodiments not falling within the scope of protection provided by the claims, the memory may include additional rules for weighting the shortest route rules and the other rules stored in memory. In addition, the at least one processor may change the route after at least one user is picked up, to pick-up at least one additional user.

For example, the exemplary computer transportation systems are configured to communicate a route to a passenger and/or vehicle by using, for example but not limited to, via an electronic device having a specifically programmed graphical user interface (GUI). In case the rideshare vehicle is an autonomous vehicle, a GUI will not be need and the system provides data that include driving instructions. For example, the route may contain a detour instruction(s)(e.g., go east, and then back west). In some example, the detour instruction can be present in the form of: text, graphical signs, audio sounds, being juxtaposed over and/or embedded in a map of a related geographic area, and any combination thereof.

For example, a detoured route with updated virtual bus stop(s) can be generated by the exemplary computer transportation system of the present disclosure after determining, utilizing the at least one routing algorithm that the detoured route would be sufficiently faster due to traffic over an original route.

For example, a detoured route with updated virtual bus stop(s) can be generated by the exemplary computer transportation system of the present disclosure after determining, utilizing the at least one routing algorithm that a detour is needed for another passenger to be picked up or dropped off in the same vehicle.

In some exemplary embodiments not falling within the scope of protection provided by the claims, the exemplary computer transportation systems is be configured to provide routing which includes detour for any of the two reasons above, but to avoid passenger aggravation, geometrical detours can be limited to 50-1000 m. In some exemplary embodiments not falling within the scope of protection provided by the claims, the geometrical detours can be limited to 350-450 m. In some exemplary embodiments not falling within the scope of protection provided by the claims, the geometrical detours can be limited to a maximum length of 200 m (e.g., one short avenue block, or two street blocks in Manhattan, New York City).

In some exemplary embodiments not falling within the scope of protection provided by the claims, the exemplary computer transportation system of the present disclosure can be configured to dynamically determine, in real-time, the fastest route that serves multiple passengers while observing spatial detour limits by utilizing, but not limited to, at least the following four steps:
1. Identify reasonable pickup and drop-off virtual bus stops for all passengers on the car;
2. Pre-computation: for each demand-point task (pickup or drop-off), remove all stops that would cause an excessive detour (at this point, a virtual bus-stop is only removed from consideration if it necessarily causes a detour (no matter which bus-stops are selected for other demand-point tasks));
3. Use at least one routing algorithm of the present disclosure described herein to calculate a route using virtual bus-stops that survived steps 1 and 2; and
4. Verify that final route causes no excessive detour for any passengers.

Consistent with another exemplary embodiment not falling within the scope of protection provided by the claims, the system may avoid using the full capacity of its vehicles in regular operation. By doing so, the system may enhances the experience of users who might otherwise feel cramped in vehicles at or near capacity.

Specifically, a system is provided for managing a fleet of ridesharing vehicles. The system may include a communications interface configured to receive requests for shared rides from a plurality of users, memory configured to store indications of passenger-capacity for specific ridesharing vehicles in the fleet, and at least one processor configured to receive information from the communications interface and access the memory. The at least one processor is configured to: assign, to ridesharing vehicles already transporting users, additional users for simultaneous transportation in the ridesharing vehicles; track a current utilized capacity of each specific ridesharing vehicle; implement a threshold block that prevents assignment of additional users to a ridesharing vehicle when the ridesharing vehicle's current utilized capacity is above a threshold being less than the ridesharing vehicle's passenger-capacity.

In related exemplary embodiments not falling within the scope of protection provided by the claims, the system may implement the threshold block across a fleet of ridesharing vehicles. For example, the at least one processor may implement the threshold block to prevent at least 10%, 15%, 20%, or 25% of the specific vehicle's capacity from being utilized. In some cases, the at least one processor is further configured to permit threshold block override in response to a received indication of an inclement weather condition. For example, the at least one processor is configured to permit threshold block override in response to a received indication of a special event condition. The at least one processor is also configured to permit threshold block override in response to a received indication of an unscheduled-user condition. The at least one processor is further configured to permit threshold block override when an estimated time in which the ridesharing vehicle's utilized capacity is above the threshold is less than a predefined period of time (e.g., less than 3 minutes). When a value of the threshold may be specific to each ridesharing vehicle, the value for one ridesharing vehicle may be one seat less than the passenger-capacity of that ridesharing vehicle. The value for one ridesharing vehicle may be two seats less than the passenger-capacity of that ridesharing vehicle. The value for one ridesharing vehicle may be three seats less than the passenger-capacity of that ridesharing vehicle. The value of the threshold may be independent to the passenger-capacity of the ridesharing vehicle, and is between four to eight users per ridesharing vehicle.

### Illustrative Examples of Dynamic Route Selection with Virtual Bus Stops Assignment

In some exemplary embodiments not falling within the scope of protection provided by the claims, the system has the ability to dynamically change a vehicle-to-passenger assignment on the fly. Thus, for example, when a ridesharing vehicle is stuck in traffic, or when a vehicle is needed more urgently for another passenger, the system can re-assign another vehicle to a previously assigned passenger.

Consistent with disclosed exemplary embodiments not falling within the scope of protection provided by the claims, a system is provided for managing a fleet of ridesharing vehicles. The system may include a communications interface configured to: receive ride requests from mobile communication devices of a plurality of users, wherein each ride request includes a starting point and a desired destination; and receive location information from a second plurality of communication devices associated with a plurality of ridesharing vehicles. The system further includes at least one processor configured to: assign a first ridesharing vehicle to pick-up the plurality of users; determine pick-up locations for the plurality of users, wherein for at least some of the plurality of users, the determined pick-up locations differ from the starting points; send directions to the at least some of the plurality of users to guide each a respective pick-up location different from the starting points; prior to at least one of the at least some users arriving at an assigned pick-up location, cancelling the assignment of the first ridesharing vehicle to the at least one first user while maintaining the assignment of the first ridesharing vehicle to others of the plurality of users; using information received from the mobile communications device of the first user to predict when the first user will arrive at the assigned pick up location; predicting when a second ridesharing vehicle may pass the assigned pick-up location; comparing the predicted passing time with the arrival time of the first user; and re-assigning the first user to the second ridesharing vehicle when the predicted passing time is after the predicted arrival time.

In exemplary embodiments not falling within the scope of protection provided by the claims, the at least one processor may continuously receive location information from the mobile communication devices of the users and the ridesharing vehicle prior to arrival at assigned pick up locations, to estimate arrival times at respective pick up locations, and to cancel the assignment of the first rideshare vehicle when the estimated arrival time if the ridesharing vehicle is before the estimate arrival time of the user. Alternatively, when the rideshare vehicle is assigned to the user, the system may generate a first time-estimation for the rideshare vehicle to arrive at the selected virtual bus stop for picking-up the user; continuously receive location information from the rideshare vehicle prior to arrival at the selected virtual bus stop, to generate an updated time-estimation for the rideshare vehicle to arrive at the selected virtual bus stop for picking-up the user; cancel the assignment of the rideshare vehicle when the updated time-estimation differs from the first time-estimation by more than a predefined threshold; and reassign another rideshare vehicle to pick-up the user from the selected virtual bus stop. The predefined threshold may include a first time period if the rideshare vehicle is running late, and a second time period if the rideshare vehicle is being too early.

In other exemplary embodiments not falling within the scope of protection provided by the claims, the at least one processor may reassign the second rideshare vehicle when the at least one processor predicts a delay in arrival of the first ridesharing vehicle at the pick-up location, or reassign the second rideshare vehicle in order to enable the first rideshare vehicle to pick up a passenger not originally assigned to the first rideshare vehicle. Additionally, the at least one processor may automatically update a route of the first ridesharing vehicle after cancelling the assignment of the first ridesharing vehicle to the first user, or automatically update a route of the second ridesharing vehicle after the re-assigning of the first user. In some cases the second ridesharing vehicle may be carrying at least one second user while being assigning to the first user. Accordingly, the at least one processor may assign the first user to the second ridesharing vehicle based on a current location of the second ridesharing vehicle and a desired destination of the at least one second user.

In some exemplary embodiments not falling within the scope of protection provided by the claims, given a list of demand-point tasks, the calculated virtual bus stop for each demand-point task is selected by the exemplary computer transportation system.

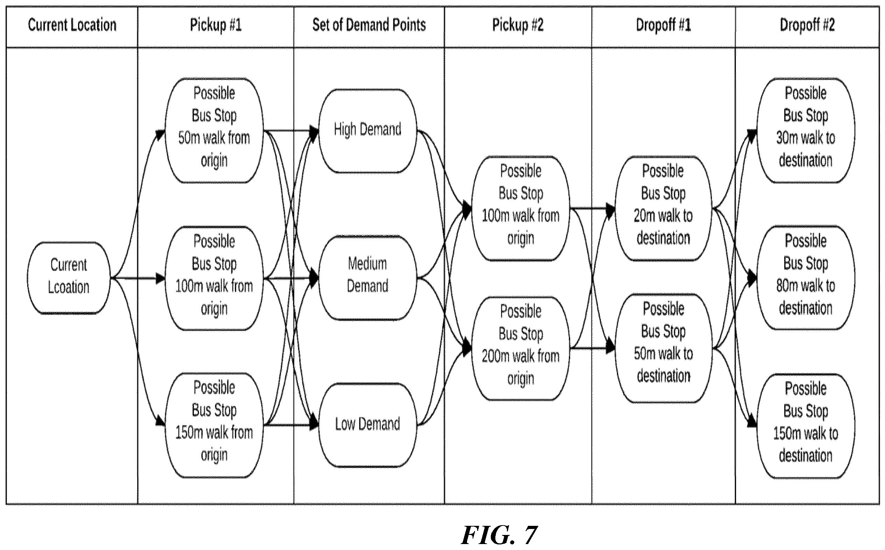

Figure 7 illustrates an example of the dynamic route-virtual bus stop selection algorithm being executed by the exemplary computer transportation system of the present disclosure. For example, as Figure 7 illustrates, the exemplary dynamic route-virtual bus stop selection algorithm which is configured to select among a plurality of potential alternatives for each virtual bus stop (e.g., Pickup#1, Pickup#2, Dropoff#1, Dropoff#2) to be assigned to passenger(s) who already requested the service and, in addition, to also select among a plurality of potential "demand point" virtual bus stop tasks at least one "demand point" virtual bus stop task that the vehicle would need to perform columns correspond to one possible location (virtual bus stop, or demand-point). Each virtual bus stop location has a cost associated with it, based on how much walking is required (for a pickup or drop-off) or how much demand is expected at that point (for a demand point). Each arrow represents a potential route from a possible location for one bus-stop or demand-point task, to a possible location for the next but-stop or demand-point task. Each arrow has a cost associated with it, based on the driving time, and based on the number of passengers that are affected by that drive (on board the car, or waiting for it).

Figure 7 further illustrates starting from the car's current location, then choosing from 3 possible virtual bus stops for the first pickup, each with an associated walking distance. After pickup, the exemplary computer transportation system is configured to choose between 3 possible designated demand-points, each with its own evaluation based on expected demand. The exemplary computer transportation system is configured then to choose between 2 possible virtual bus stops for another pickup, 2 possible virtual bus stops for the first passenger's drop-off, and finally 3 possible stops for the second passenger's drop-off. In this example, there are at least 3x3x2x2x3 = 108 possible real-time selections, which translate into making selection among at least 108 possible routes.

### Automatically Confirming User Identity

As mentioned above, the ridesharing fleet may include autonomous vehicles. It may be desired to verify that passengers entering a vehicle are indeed the ones who ordered the vehicle. In a broadest sense, automatic verification of a rider's identity may be beneficial in other vehicle-for-hire scenarios - not only autonomous.

Accordingly, an electronic system for automatically confirming identity of passengers in vehicles-for-hire, is provided. The system may include a communications interface configured to receive a ride request from a first mobile communications device of a user, memory for electronically storing unique identifying information associated with the user; and at least one processor. The at least one processor may be configured to: process the ride request to assign a vehicle-for-hire to pick up the user; cause the communications interface to transmit to a second mobile communications device within the vehicle-for-hire a pick-up location for the user; receive from the communications interface a signal obtained from the user and reflective of the unique identifying information of the user; and compare the signal with the unique identifying information stored in memory to confirm an identity of the picked-up user.

In one exemplary embodiment not falling within the scope of protection provided by the claims, the signal obtained from the user includes image information associated with the user's face captured by an image sensor associated with the vehicle-for-hire. In another exemplary embodiment not falling within the scope of protection provided by the claims, the signal obtained from the user conveys information transmitted between the first mobile communications device and the second mobile communications device. In yet another exemplary embodiment not falling within the scope of protection provided by the claims, the signal obtained from the user conveys a code carried by the first mobile communications device. For example, the signal includes a digital certificate used to uniquely identify the mobile device of the individual entering the autonomous vehicle. Alternatively, the signal includes a password entered by the individual after entering the autonomous vehicle. In some cases the user may be prevented from entering the vehicle-for-hire until after verification of the identity of the user. In other cases, upon verification of the user's identity, a door of the vehicle-for-hire may be automatically unlocked, or the rideshare vehicle may start driving.

### Illustrative Examples of Cost Function

In some exemplary embodiments not falling within the scope of protection provided by the claims, the exemplary computer transportation systems of the present disclosure are configured to dynamically calculate/determine/select, utilizing the exemplary dynamic route-virtual bus stop selection algorithm of the present disclosure, a route that minimizes a cost function accounting for at least one of the following factors:
1. Duration each passenger spends in the car;
2. Duration each passenger spends waiting;
3. Duration each passenger spends walking from origin to pickup and from drop-off to destination;
4. Duration in which car is held up (i.e., until final drop-off);
5. Cost of chosen demand point (higher cost for low demand);
6. Any combination thereof.

Table 2 provides an illustrative computer script which can be utilized to specifically configure the exemplary computer transportation system of the present disclosure to dynamically calculate/determine/select, in real time, an updatable route having a plurality of virtual bus stops . For example, the illustrative computer script of Table 2 is configured to consider up to 15 demand-point tasks (including multiple sets of demand points) with more than 10 possible locations for some of the demand-point tasks, which can result in more than a billion possible routes. For example, the illustrative computer script of Table 2 is configured to compute the cost for the best sub-route ending in a particular location in a particular layer is computed, after the best sub-routes ending at each location in the previous layer are known.

| Table 2. |
|---|
| for task in task_list: |
| for location in task: |
| min_route_cost = infinity |
| for prev_location in task.previous: |
| route_cost = prev_location.route_cost |
| + driving_time(prev_location, location) |
| * driving_weight(task) |
| + location.cost |
| if route_cost < min_route_cost: |
| min_route_cost = route_cost |
| location.back_reference = previous_location |
| final_location = min(last_task, key=route_cost) |
| route = [final_location] |
| while route[0].back_reference is not null: |
| route.insert(0, route[0].back_reference) |

In one example, to figure out the calculated route ending in a particular location of a particular demand-point task, the exemplary computer transportation system is configured to go over all locations for the previous demand-point task. And, since the exemplary computer transportation system is configured to go over demand-point tasks in order, the best route ending in each of these previous locations would be computed.

In some exemplary embodiments not falling within the scope of protection provided by the claims, for each previous location, the exemplary computer transportation system is configured to take the cost for previous location's calculated route, add the driving time from the previous location to the current location (weighted by the number of passengers affected by it), add the cost (walking/demand) for the new location, and get the route cost for the new location.

In some exemplary embodiments not falling within the scope of protection provided by the claims, taking the calculated cost out of all options for previous locations, the exemplary computer transportation system is configured to get the final best cost for a route ending in the current location. The exemplary computer transportation system is configured to do this for each location in the current layer, and proceed to the next layer.

In order to improve ETA, the suggested system may use historical data to predict future demand and preposition empty vehicles in areas near to where demand is expected. If the ridesharing vehicle includes autonomous vehicles, these vehicles may be assigned to circular routes in high demand areas rather than sit idle in a holding zone.

Consistent, with some exemplary embodiments not falling within the scope of protection provided by the claims, a system for managing a fleet of ridesharing vehicles is provided. The system comprising memory configured to store historical data associated with past demand for ridesharing vehicles in a geographical area, a communications interface, and at least one processor configured to access the memory. The at least one processor may use the historical data to predict imminent demand of ridesharing requests including predicting general zones in the geographical area associated with imminent demand; select a holding area for prepositioning empty ridesharing vehicles in order to expedite satisfaction of the predicted imminent demand; send, via the communications interface, to a mobile communications device in a specific ridesharing vehicle, instructions directing the specific ridesharing vehicle to the holding zone and to maintain a presence in the holding zone despite other ridesharing demand in the geographical area.

In related exemplary embodiments not falling within the scope of protection provided by the claims, the memory may store data collected about locations, days, and times of prior ride requests. The predicting geographical zones includes predicting a region from which requests will emanate. In one embodiment, selecting the holding area includes making a selection from a list of holding area options stored in the memory. The holding area may include a specific location, an area, or a neighborhood. The at least one processor may receive a rideshare request, from a mobile communications device of a user in a vicinity of a selected holding area, and to send a message to an empty rideshare vehicle in the selected holding area to pick-up the user, including routing instructions to a pick-up location in a vicinity of the selected holding area. In addition, in selecting a holding zone for a particular ridesharing vehicle, the at least one processor is further configured to take into account passenger-capacity of the particular ridesharing vehicle. Also, in selecting a holding zone for a particular ridesharing vehicle, the at least one processor is further configured to take into account a time of a day (for example, if this is the beginning of the shifts, before rush hour, etc.) The at least one processor may also be configured to identify a plurality of empty ridesharing vehicles and to direct each empty vehicle to a differing holding zone. When at least some of the ridesharing vehicles are manually-driven ridesharing vehicle, and the holding zone includes a location where the ridesharing vehicle can park while waiting for a user assignment. But when at least some of the ridesharing vehicles are autonomous, and the holding zone includes a route where the autonomous vehicle is directed to drive while awaiting a pick-up assignment.

### Illustrative Operating Environments

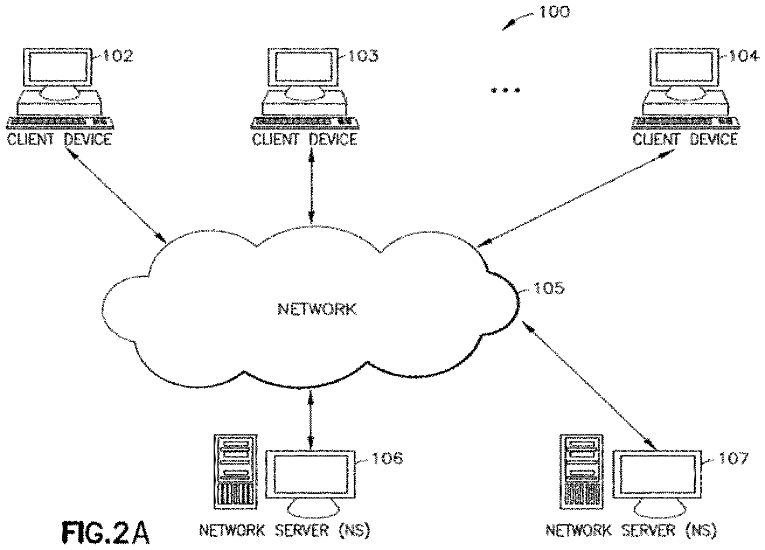

FIG. 2A illustrates one exemplary embodiment not falling within the scope of protection provided by the claims of an environment in which the exemplary computer transportation system of the present disclosure may operate. However, not all of these components may be required to practice the disclosure, and variations in the arrangement and type of the components may be made without departing from the disclosure. In some embodiments, the inventive system and method may include a large number of members and/or concurrent transactions. In other embodiments, the inventive system and method are based on a scalable computer and network architecture that incorporates various strategies for assessing the data, caching, searching, and database connection pooling. An example of the scalable architecture is an architecture that is capable of operating multiple servers.

In exemplary embodiments not falling within the scope of protection provided by the claims, members of the exemplary computer transportation system of the present disclosure 102-104 include virtually any computing device capable of receiving and sending a message over a network, such as network 105, to and from another computing device, such as servers 106 and 107, each other, and the like. In embodiments, the set of such devices includes devices that typically connect using a wired communications medium such as personal computers, multiprocessor systems, microprocessor-based or programmable consumer electronics, network PCs, and the like. In embodiments, the set of such devices also includes devices that typically connect using a wireless communications medium such as cell phones, smart phones, pagers, walkie talkies, radio frequency (RF) devices, infrared (IR) devices, CBs, integrated devices combining one or more of the preceding devices, or virtually any mobile device, and the like. Similarly, in exemplary embodiments not falling within the scope of protection provided by the claims, client devices 102-104 are any device that is capable of connecting using a wired or wireless communication medium such as a PDA, POCKET PC, wearable computer, and any other device that is equipped to communicate over a wired and/or wireless communication medium.

In exemplary embodiments not falling within the scope of protection provided by the claims, each member device within member devices 102-104 may include a browser application that is configured to receive and to send web pages, and the like. In exemplary embodiments not falling within the scope of protection provided by the claims, the browser application may be configured to receive and display graphics, text, multimedia, and the like, employing virtually any web based language, including, but not limited to Standard Generalized Markup Language (SMGL), such as HyperText Markup Language (HTML), a wireless application protocol (WAP), a Handheld Device Markup Language (HDML), such as Wireless Markup Language (WML), WMLScript, XML, JavaScript, and the like. In embodiments, programming may include either Java, .Net, QT, C, C++ or other suitable programming language.

In exemplary embodiments not falling within the scope of protection provided by the claims, member devices 102-104 may be further configured to receive a message from another computing device employing another mechanism, including, but not limited to email, Short Message Service (SMS), Multimedia Message Service (MMS), instant messaging (IM), internet relay chat (IRC), mIRC, Jabber, and the like or a Proprietary protocol.

In exemplary embodiments not falling within the scope of protection provided by the claims, network 105 may be configured to couple one computing device to another computing device to enable them to communicate. In some exemplary embodiments not falling within the scope of protection provided by the claims, network 105 may be enabled to employ any form of computer readable media for communicating information from one electronic device to another. Also, in embodiments, network 105 may include a wireless interface, and/or a wired interface, such as the Internet, in addition to local area networks (LANs), wide area networks (WANs), direct connections, such as through a universal serial bus (USB) port, other forms of computer-readable media, or any combination thereof. In embodiments, on an interconnected set of LANs, including those based on differing architectures and protocols, a router may act as a link between LANs, enabling messages to be sent from one to another.

Also, in some exemplary embodiments not falling within the scope of protection provided by the claims, communication links within LANs typically include twisted wire pair or coaxial cable, while communication links between networks may utilize analog telephone lines, full or fractional dedicated digital lines including T1, T2, T3, and T4, Integrated Services Digital Networks (ISDNs), Digital Subscriber Lines (DSLs), wireless links including satellite links, or other communications links known to those skilled in the art. Furthermore, in some embodiments, remote computers and other related electronic devices could be remotely connected to either LANs or WANs via a modem and temporary telephone link. In essence, in some embodiments, network 105 includes any communication method by which information may travel between client devices 102-104, and servers 106 and 107.

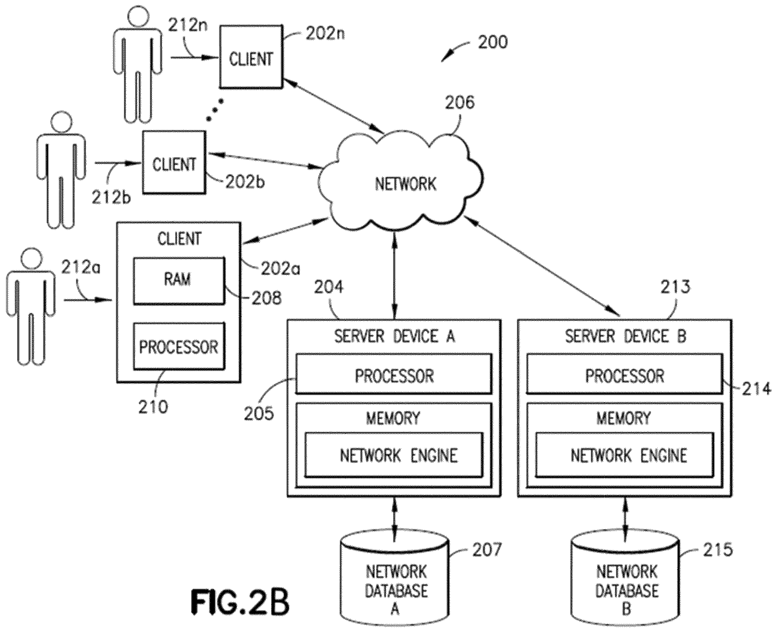

FIG. 2B shows another exemplary embodiment not falling within the scope of protection provided by the claims of the computer and network architecture that supports the computer transportation methods and computer transportation systems of the instant disclosure. In some exemplary embodiments not falling within the scope of protection provided by the claims, the member devices 202a, 202b thru 202n shown each at least includes a computer-readable medium, such as a random access memory (RAM) 208 coupled to a processor 210 or FLASH memory. In some exemplary embodiments not falling within the scope of protection provided by the claims, the processor 210 may execute computer-executable program instructions stored in memory 208. In some exemplary embodiments not falling within the scope of protection provided by the claims, such processors comprise a microprocessor, an ASIC, and state machines. In some exemplary embodiments not falling within the scope of protection provided by the claims, such processors comprise, or may be in communication with, media, for example computer-readable media, which stores instructions that, when executed by the processor, cause the processor to perform the steps described herein. Exemplary embodiments not falling within the scope of protection provided by the claims of computer-readable media may include, but are not limited to, an electronic, optical, magnetic, or other storage or transmission device capable of providing a processor, such as the processor 210 of client 202a, with computer-readable instructions. In some exemplary embodiments not falling within the scope of protection provided by the claims, other examples of suitable media may include, but are not limited to, a floppy disk, CD-ROM, DVD, magnetic disk, memory chip, ROM, RAM, an ASIC, a configured processor, all optical media, all magnetic tape or other magnetic media, or any other medium from which a computer processor can read instructions. Also, various other forms of computer-readable media may transmit or carry instructions to a computer, including a router, private or public network, or other transmission device or channel, both wired and wireless. In some embodiments, the instructions may comprise code from any computer-programming language, including, for example, C, C++, Visual Basic, Java, Python, Perl, and JavaScript.

In some exemplary embodiments not falling within the scope of protection provided by the claims, member devices 202a-n may also comprise a number of external or internal devices such as a mouse, a CD-ROM, DVD, a keyboard, a display, or other input or output devices. Examples of client devices 202a-n may be personal computers, digital assistants, personal digital assistants, cellular phones, mobile phones, smart phones, pagers, digital tablets, laptop computers, Internet appliances, and other processor-based devices. In general, a client device 202a may be any type of processor-based platform that is connected to a network 206 and that interacts with one or more application programs. Client devices 202a-n may operate on any operating system capable of supporting a browser or browser-enabled application, such as Microsoft™, Windows™, or Linux. The client devices 202a-n shown may include, for example, personal computers executing a browser application program such as Microsoft Corporation's Internet Explorer™, Apple Computer, Inc.'s Safari™, Mozilla Firefox, and Opera. Through the client devices 202a-n, users, 212a-n communicate over the network 206 with each other and with other systems and devices coupled to the network 206. As shown in FIG. 2, server devices 204 and 213 may be also coupled to the network 206. In an exemplary embodiment not falling within the scope of protection provided by the claims of the present disclosure, one or more clients can be a mobile client.

In some exemplary embodiments not falling within the scope of protection provided by the claims, the term "mobile electronic device" may refer to any portable electronic device that may or may not be enabled with location tracking functionality. For example, a mobile electronic device can include, but is not limited to, a mobile phone, Personal Digital Assistant (PDA), Blackberry™, Pager, Smartphone, or any other reasonable mobile electronic device. For ease, at times the above variations are not listed or are only partially listed, this is in no way meant to be a limitation.

In some exemplary embodiments not falling within the scope of protection provided by the claims, the terms "proximity detection," "locating," "location data," "location information," and "location tracking" as used herein may refer to any form of location tracking technology or locating method that can be used to provide a location of a mobile electronic device, such as, but not limited to, at least one of location information manually input by a user, such as, but not limited to entering the city, town, municipality, zip code, area code, cross streets, or by any other reasonable entry to determine a geographical area; Global Positions Systems (GPS); GPS accessed using Bluetooth™; GPS accessed using any reasonable form of wireless and/or non-wireless communication; WiFi™ server location data; Bluetooth™ based location data; triangulation such as, but not limited to, network based triangulation, WiFi™ server information based triangulation, Bluetooth™ server information based triangulation; Cell Identification based triangulation, Enhanced Cell Identification based triangulation, Uplink-Time difference of arrival (U-TDOA) based triangulation, Time of arrival (TOA) based triangulation, Angle of arrival (AOA) based triangulation; techniques and systems using a geographic coordinate system such as, but not limited to, longitudinal and latitudinal based, geodesic height based, cartesian coordinates based; Radio Frequency Identification such as, but not limited to, Long range RFID, Short range RFID; using any form of RFID tag such as, but not limited to active RFID tags, passive RFID tags, battery assisted passive RFID tags; or any other reasonable way to determine location. For ease, at times the above variations are not listed or are only partially listed, this is in no way meant to be a limitation.

In some exemplary embodiments not falling within the scope of protection provided by the claims, near-field wireless communication (NFC) can represent a short-range wireless communications technology in which NFC-enabled devices are "swiped," "bumped," "tap" or otherwise moved in close proximity to communicate. In some embodiments, NFC could include a set of short-range wireless technologies, typically requiring a distance of 10 cm or less.

In some exemplary embodiments not falling within the scope of protection provided by the claims, NFC may operate at 13.56 MHz on ISO/IEC 18000-3 air interface and at rates ranging from 106 kbit/s to 424 kbit/s. In some embodiments, NFC can involve an initiator and a target; the initiator actively generates an RF field that can power a passive target. In some embodiment, this can enable NFC targets to take very simple form factors such as tags, stickers, key fobs, or cards that do not require batteries. In some embodiments, NFC peer-to-peer communication can be conducted when a plurality of NFC-enable devices within close proximity of each other.

In some exemplary embodiments not falling within the scope of protection provided by the claims, a computer-implemented method is provided. The method comprising: electronically receiving, in real-time, by at least one specifically programmed computer processor, via at least one computer network, a plurality of electronic riding requests from a plurality of electronic computing devices operated by a plurality of ride-sharing requesting passengers; wherein each electronic riding request comprises: an origin location data identifying a passenger-requested origin point, and a destination location data identifying a passenger-requested destination point; for a particular electronic riding request of a particular ride-sharing requesting passenger: electronically accessing, in real-time, by the at least one specifically programmed computer processor, for at least one database, at least one grid of virtual bus stops for at least one geographic locale; wherein each virtual bus stop corresponds to a geographic location point within the at least one geographic locale at which a particular ride-sharing requesting passenger can be picked up or drop off by a first assigned vehicle; dynamically selecting, in real-time, by the at least one specifically programmed computer processor, from at least one grid of virtual bus stops for the at least one geographic locale, a subset of candidate virtual pickup bus stops and a subset of candidate virtual drop-off bus stops based, at least in part, on: i) a first absolute walking distance, being a distance from the passenger-requested origin point to at least one candidate virtual pickup bus stop of the subset of candidate virtual pickup bus stops, and ii) a second absolute walking distance, being a distance from at least one candidate virtual drop-off bus stop of the subset of candidate virtual drop-off bus stops to the passenger-requested destination point; electronically receiving, in real-time, during a first time period, by the at least one specifically programmed computer processor, via the at least one computer network, current vehicle location data for a plurality of ride-sharing vehicles traveling within the at least one geographic locale, wherein the current vehicle location data comprise global positioning system (GPS) data generated by at least one GPS component of at least one electronic computing device associated with each ride-sharing vehicle; electronically accessing, in real-time, by the at least one specifically programmed computer processor, current ride-sharing data which are representative of current routes and current virtual bus stops associated with a plurality of riding passengers who are currently riding in the plurality of ride-sharing vehicles; wherein the plurality of riding passengers comprises at least one hundred riding passengers; dynamically determining, in real-time, the by the at least one specifically programmed computer processor, a plurality of candidate vehicles which can pick up the particular ride-sharing requesting passenger, wherein the determining of the plurality of candidate vehicles is based, at least in part on: the subset of candidate virtual pickup bus stops, the subset of candidate virtual drop-off bus stops, the current ride-sharing data and the current vehicle location data; dynamically determining, in real-time, from the plurality of candidate vehicles, by the at least one specifically programmed computer processor, 1) a first assigned vehicle for picking up the particular ride-sharing requesting passenger and 2) a pair of assigned virtual pickup and drop-off bus stop tasks related to the particular ride-sharing requesting passenger, based, at least in part, on: i) maximizing a vehicle occupancy to be at least two ride-sharing passengers in the first assigned vehicle at least a portion of a ride of the particular ride-sharing requesting passenger, ii) minimizing at least one of: 1) a first duration of time which each ride-sharing passenger spends in each candidate ride-sharing vehicle; 2) a second duration of time which each ride-sharing passenger spends waiting for each candidate ride-sharing vehicle to arrive at a respective virtual bus stop; 3) a third duration of time which each ride-sharing passenger spends walking from the passenger-requested origin point to a respective candidate virtual pickup bus stop and from a respective candidate virtual drop-off bus stop to the passenger-requested destination point; 4) a fourth duration of time which each candidate ride-sharing vehicle is held up in a traffic until a respective final virtual drop-off bus stop associated with the last ride-sharing passenger during a particular time period; iii) an order in which a pair of candidate virtual pickup and drop-off bus stop tasks are inserted into a route schedule of existing pickup and drop-off virtual bus stop tasks associated with each candidate vehicle of the plurality of candidate vehicles; dynamically generating, in real-time, by the at least one specifically programmed computer processor, a route proposal for the first assigned vehicle, wherein the route proposal for the first assigned vehicle comprises a first updated route schedule, formed by inserting the pair of assigned virtual pickup and drop-off bus stop tasks of the particular ride-sharing requesting passenger into a route schedule, comprising existing pickup and drop-off virtual bus stop tasks associated with the first assigned vehicle; causing to electronically display, in real-time, via the at least one computer network, by the at least one specifically programmed computer processor, the assigned virtual pickup bus stop on a screen of a first electronic computing device associated with the particular ride-sharing requesting passenger; and causing to electronically display, in real-time, via the at least one computer network, by the at least one specifically programmed computer processor, the first updated route schedule on a screen of a second electronic computing device associated with the first assigned vehicle.

The method also include selecting of each candidate virtual pickup bus stop into the subset of candidate virtual pickup bus stops is based, at least in part, on at least one of: i) a first walking distance, being a distance from the passenger-requested origin point to each candidate virtual pickup bus stop, ii) a sum of the first walking distance and a second walking distance, being a distance from each candidate virtual drop-off bus stop to the passenger-requested destination point, iii) at least one first walking comfort condition associated with the first walking distance, the second walking distance, or both, iv) at least one first walking safety condition associated with a first walking route, being a route from the passenger-requested origin point to each candidate virtual pickup bus stop, v) at least one passenger well-being related factor, vi) at least one passenger personal preference related to at least one of: a walking distance, an expected time of arrival, a ride duration, a price, and any combination thereof, vii) at least one environment related factor, viii) a first cost assigned to each pair of a particular candidate virtual pickup bus stop and a particular candidate virtual drop-off bus stop, and ix) any combination thereof; and wherein the selecting of each candidate virtual drop-off bus stop into the subset of candidate virtual drop-off bus stops is based, at least in part, on at least one of: i) the second walking distance, ii) the sum of the first walking distance and the second walking distance, iii) the at least one walking comfort condition, iv) at least one second walking safety condition associated with a second walking route, being a route from each candidate virtual drop-off bus stop to the passenger-requested destination point, v) the at least one passenger well-being related factor, vi) the at least one passenger personal preference, vii) the at least one environment related factor, viii) the first cost assigned to each pair of the particular candidate virtual pickup bus stop and the particular candidate virtual drop-off bus stop, and ix) any combination thereof.

In one exemplary embodiment not falling within the scope of protection provided by the claims, the cost assigned to each pair of the particular candidate virtual pickup bus stop and the particular candidate virtual drop-off bus stop is based, at least in part on: at least one cost related to at least one ride segment passing through an area associated with a particular demand.

In another exemplary embodiment not falling within the scope of protection provided by the claims, the first absolute walking distance is a first reasonable walking distance, wherein the second absolute walking distance is a second reasonable walking distance, wherein the method further comprises: dynamically determining, by the at least one specifically programmed computer processor, the first reasonable walking distance based, at least in part, on at least one of: i) the distance from the passenger-requested origin point to the at least one candidate virtual pickup bus stop, ii) a direction of travel of a road on which the at least one candidate virtual pickup bus stop is located, iii) an availability of at least one first additional candidate virtual pickup bus stop having a shorter walking distance, and iv) an availability of at least one second additional candidate virtual pickup bus stop having a longer walking distance; and dynamically determining, by the at least one specifically programmed computer processor, the second reasonable walking distance based, at least in part, on at least one of: i) the distance from at least one candidate virtual drop-off bus stop of the subset of candidate virtual drop-off bus stops to the passenger-requested destination point, ii) a direction of travel of a road on which the at least one candidate virtual drop-off stop is located iii) an availability of at least one first additional candidate virtual drop-off bus stop having a shorter walking distance, an iv) an availability of at least one second additional candidate virtual drop-off bus stop having a longer walking distance.

In another exemplary embodiment not falling within the scope of protection provided by the claims dynamically generating the route proposal for the first assigned vehicle is based, at least in part, on one of : i) at least one existing pickup virtual bus stop task and at least one existing drop-off virtual bus stop task associated with the first assigned vehicle, ii) a road speed of at least one road on which the first assigned vehicle travels or will travel, iii) a distance of at least one route which the first assigned vehicle will travel, and iv) a particular demand associated with the at least one route which the first assigned vehicle will travel.

In another exemplary embodiment not falling within the scope of protection provided by the claims continuously tracking, in real-time, by the at least one specifically programmed computer processor, the current vehicle location and the current ride-sharing data to identify at least one condition which requires to re-assign the pair of assigned virtual pickup and drop-off bus stop tasks related to the particular ride-sharing requesting passenger to a second assigned vehicle; and dynamically reassigning, by the at least one specifically programmed computer processor, the assigned virtual pickup bus stop task from the first assigned vehicle to the second assigned vehicle; dynamically revising, by the at least one specifically programmed computer processor, the first updated route schedule of the first assigned vehicle to obtain a first revised updated route schedule, by removing the pair of assigned virtual pickup and drop-off bus stop tasks related to the particular ride-sharing requesting passenger, and dynamically revising, by the at least one specifically programmed computer processor, a second updated route schedule of the second assigned vehicle to add the pair of assigned virtual pickup and drop-off bus stop tasks related to the particular ride-sharing requesting passenger, causing to electronically display, in real-time, via the at least one computer network, by the at least one specifically programmed computer processor, the first revised updated route schedule on the screen of the electronic computing device associated with the first assigned vehicle; and causing to electronically display, in real-time, via the at least one computer network, by the at least one specifically programmed computer processor, the second updated route schedule on a screen of an electronic computing device associated with the second assigned vehicle.

In another exemplary embodiment not falling within the scope of protection provided by the claims, the method includes generating, by the at least one specifically programmed computer processor, the at least one grid of virtual bus stops for at least one geographic locale; wherein each virtual bus stop corresponds to a geographic location point within the at least one geographic locale at which at least one passenger can be picked up or drop off by at least one vehicle; electronically receiving, by the at least one specifically programmed computer processor, via the at least one computer network, human-readable location identifying data for uniquely identify each geographic location point corresponding to each virtual bus stop in the grid of virtual bus stops; electronically associating, by the at least one specifically programmed computer processor, the human-readable location identifying data to each geographic location point corresponding to each virtual bus stop in the grid of virtual bus stops; and electronically storing, by the at least one specifically programmed computer processor, the grid of virtual bus stops with the human-readable location identifying data in the at least one database.

In another embodiment, the geographic location point is along at least one main road of the at least one geographic locale. In another embodiment, the method further comprising: generating, by the at least one specifically programmed computer processor, demand-point tasks based, at least in part, on one of: current share-riding demand data within the at least one geographic locale, and historic share-riding demand data within the at least one geographic locale; dynamically assigning, by the at least one specifically programmed computer processor, at least one demand-point task assigned to the first assigned vehicle; and wherein the dynamically determining the first assigned vehicle and the pair of assigned virtual pickup and drop-off bus stop tasks related to the particular ride-sharing requesting passenger is further based, at least in part, on: iv) the at least one demand-point task.

In another embodiment, the current demand data comprises data regarding: at least one of: i) a first current share-riding demand in a vicinity of the passenger-requested origin point, and ii) a second current share-riding demand in a vicinity of the passenger-requested destination point. In some examples, each respective reasonable walking distance is in the range of 100-300 meters, and each respective absolute walking distance is in the range of 200-500 meters.

In another embodiment, the dynamically determining the first assigned vehicle and the pair of assigned virtual pickup and drop-off bus stop tasks related to the particular ride-sharing requesting passenger is further based, at least in part, on further minimizing at least one of: 5) a fifth duration of time which each candidate ride-sharing vehicle is estimated to take to arrive at the respective candidate virtual pickup bus stop based on existing route schedule, and 6) a detour distance which each candidate ride-sharing vehicle is estimated to travel to arrive at the respective candidate virtual pickup bus stop based on the existing route schedule. For example, the fifth duration of time is in the range of 0.5-15 minutes, and the detour distance is in the range of 100-1000 meters.

## Claims

1. A method for routing a rideshare vehicle, the method comprising:
receiving from a mobile communications device of a user a request for a rideshare (110), wherein the request includes information associated with a current location of the user and a desired destination;
identifying, based on current locations of multiple rideshare vehicles and the received request, a rideshare vehicle to pick-up the user (120);
selecting, based on a current travel route of the rideshare vehicle, virtual bus stops for the identified rideshare vehicle, wherein the virtual bus stops include a pick-up location and a drop-off location for the user, and wherein a location of the selected virtual bus stop for picking-up the user differs from the current location of the user (130); and
calculating an expected arrival time for the user at the selected virtual bus stop for picking up the user;
calculating an expected arrival time for the rideshare vehicle at the selected virtual bus stop for picking-up the user; and
assigning the rideshare vehicle to pick up the user if the user's expected arrival time at the selected virtual bus stop for picking-up the user precedes the expected arrival time of the rideshare vehicle at the selected virtual bus stop for picking-up the user (140);
wherein the location of the selected virtual bus stop for picking-up the user differs from a location of another virtual bus stop selected for picking-up another user assigned to the rideshare vehicle.

2. The method of claim 1, further comprising:
receiving traffic data and accounting for the traffic when calculating the expected arrival time of the rideshare vehicle.

3. The method of any of the claims above, further comprising:
when the rideshare vehicle is assigned to the user, generating a first time-estimation for the rideshare vehicle to arrive at the selected virtual bus stop for picking-up the user;
continuously receiving location information from the rideshare vehicle prior to arrival at the selected virtual bus stop for picking up the user, to generate an updated time-estimation for the rideshare vehicle to arrive at the selected virtual bus stop for picking-up the user;
canceling the assignment of the rideshare vehicle when the updated time-estimation differs from the first time-estimation by more than a predefined threshold; and
reassigning another rideshare vehicle to pick-up the user from the selected virtual bus stop for picking up the user.

4. The method of any of the claims above, further comprising:
determining walking directions for the user from the current location of the user to the selected virtual bus stop for picking up the user; and
transmitting the walking directions to the mobile communications device of the user to thereby guide the user to the selected virtual bus stop for picking up the user.

5. The method of any of the claims above, further comprising:
storing in memory a plurality of pre-identified locations for virtual bus stops; and
selecting virtual bus stops from the pre-identified locations stored in the memory.

6. The method of any of the claims above, wherein the information associated with a current location of the users includes GPS information or a user-requested pick-up location.

7. The method of any of the claims above, further comprising:
providing the user with at least two ridesharing proposals, wherein each ridesharing proposal includes a differing estimated time for pick-up; and
upon receiving input selection from the user, assigning a rideshare vehicle associated with the selected ridesharing proposal to the user.

8. The method of any of the claims above, wherein the request for a rideshare further includes a user-requested pick-up time, and the method further comprising:
considering the user-requested pick-up time when assigning a rideshare vehicle to pick-up the user.

9. The method of any of the claims above, further comprising:
dynamically selecting virtual bus stops such that the pick-up location is less than a threshold distance from the user's current location and the drop-off location is less than a threshold distance from the user's desired destination.

10. The method of claim 9, wherein the threshold distance is, at least partially, determined in real-time based on at least one of a weather condition, an overall system demand, and a detour duration for other users of the rideshare vehicle.

11. The method of any of the claims above, further comprising:
dynamically assigning rideshare vehicles to pick-up users in a manner that maximizes an occupancy of the multiple rideshare vehicles.

12. The method of any of the claims above, further comprising:
dynamically assigning rideshare vehicles to pick-up users based on prediction that other requests for rideshare will be received from locations proximate the travel route of the rideshare vehicle.

13. The method of any of the claims above, further comprising:
dynamically assigning rideshare vehicles to pick-up users in a manner that minimizes at least one of the following quality of service factors:
i) a first duration of time which each user spends in the rideshare vehicle;
ii) a second duration of time which each user spends waiting for the rideshare vehicle to arrive at a respective virtual bus stop;
iii) a third duration of time which each user spends walking to a respective virtual pickup bus stop; and
iv) a fourth duration of time which each user spends walking to a respective desired destination.

14. A system comprising:
a communications interface configured to:
receive from a mobile communications device of a user a request for a rideshare, wherein the request includes information associated with a current location of the user and a desired destination; and
at least one processor configured to implement the method of any preceding claim.

## Patentansprüche

1. Verfahren zum Routen eines Mitfahr-Fahrzeugs, wobei das Verfahren Folgendes umfasst:
Empfangen einer Anforderung einer Mitfahrgelegenheit (110) von einer mobilen Kommunikationsvorrichtung eines Benutzers, wobei die Anforderung Informationen beinhaltet, die mit einem aktuellen Standort des Benutzers und einem gewünschten Ziel verbunden sind,
Identifizieren eines Mitfahr-Fahrzeugs für das Abholen des Benutzers (120), basierend auf den aktuellen Positionen mehrerer Mitfahr-Fahrzeuge und der eingegangenen Anforderung,
Auswählen virtueller Bushaltestellen für das identifizierte Mitfahr-Fahrzeug, basierend auf einer aktuellen Fahrtroute des Mitfahr-Fahrzeugs, wobei die virtuellen Bushaltestellen eine Haltestelle für das Einsteigen und eine Haltestelle für das Aussteigen des Benutzers mit einem Ausstiegsort des Benutzers beinhalten, und wobei sich der Ort der ausgewählten virtuellen Bushaltestelle für das Abholen des Benutzers von dem aktuellen Standort des Benutzers (130) unterscheidet, und
Berechnen einer voraussichtlichen Ankunftszeit des Benutzers an der ausgewählten virtuellen Bushaltestelle für das Abholen des Benutzers:
Berechnen einer voraussichtlichen Ankunftszeit des Mitfahr-Fahrzeugs an der ausgewählten virtuellen Bushaltestelle für das Abholen des Benutzers: und
Zuweisen des Mitfahr-Fahrzeugs, das den Benutzer abholen soll, wenn die voraussichtliche Ankunftszeit des Benutzers an der ausgewählten virtuellen Bushaltestelle für das Abholen des Benutzers der voraussichtlichen Ankunftszeit des Mitfahr-Fahrzeugs an der ausgewählten virtuellen Bushaltestelle für das Abholen des Benutzers (140) vorausgeht:
wobei sich der Ort der ausgewählten virtuellen Bushaltestelle für das Abholen des Benutzers von einem Standort einer anderen virtuellen Bushaltestelle unterscheidet, die für das Abholen eines anderen Benutzers ausgewählt wurde, der dem Mitfahr-Fahrzeug zugeordnet ist.

2. Verfahren von Anspruch 1, ferner umfassend:
Empfangen von Verkehrsdaten und Berücksichtigen des Verkehrs beim Berechnen der voraussichtlichen Ankunftszeit des Mitfahr-Fahrzeugs.

3. Verfahren nach einem der obigen Ansprüche, ferner umfassend:
Erzeugen einer ersten Zeitschätzung für die Ankunft des Mitfahr-Fahrzeugs an der ausgewählten virtuellen Bushaltestelle für das Abholen des Benutzers, sobald das Mitfahr-Fahrzeug dem Benutzer zugeordnet ist,
kontinuierliches Empfangen von Standortinformationen vom Mitfahr-Fahrzeug vor der Ankunft an der ausgewählten virtuellen Bushaltestelle für das Abholen des Benutzers, um eine aktualisierte Zeitschätzung für die Ankunft des Mitfahr-Fahrzeugs an der ausgewählten virtuellen Bushaltestelle für das Abholen des Benutzers zu erzeugen,
Aufheben der Zuordnung des Mitfahr-Fahrzeugs, wenn die aktualisierte Zeitschätzung um mehr als einen vordefinierten Schwellenwert von der ersten Zeitschätzung abweicht, und
Neuzuweisen eines anderen Mitfahr-Fahrzeugs, um den Benutzer an der ausgewählten virtuellen Bushaltestelle für das Abholen des Benutzers abzuholen.

4. Verfahren nach einem der obigen Ansprüche, ferner umfassend:
Bestimmen von Gehrichtungen des Benutzers vom aktuellen Standort des Benutzers bis zur ausgewählten virtuellen Bushaltestelle für das Abholen des Benutzers, und
Übertragen der Gehrichtungen an die mobile Kommunikationsvorrichtung des Benutzers, um den Benutzer dadurch zur ausgewählten virtuellen Bushaltestelle für die Abholung des Benutzers zu leiten.

5. Verfahren nach einem der obigen Ansprüche, ferner umfassend:
Speichern einer Vielzahl vordefinierter Positionen für virtuelle Bushaltestellen im Speicher, und Auswählen virtueller Bushaltestellen aus den im Speicher gespeicherten vordefinierten Positionen.

6. Verfahren nach einem der obigen Ansprüche, wobei die mit einem aktuellen Standort der Benutzer verbundenen Daten GPS-Daten oder einen vom Benutzer angeforderten Abholort beinhalten.

7. Verfahren nach einem der obigen Ansprüche, ferner umfassend:
Abgabe von mindestens zwei Mitfahrvorschlägen an den Benutzer, wobei jeder Mitfahrvorschlag eine unterschiedliche geschätzte Zeit für die Abholung beinhaltet, und
nach dem Empfangen einer Eingabeauswahl vom Benutzer, Zuweisen eines dem ausgewählten Mitfahrvorschlag zugeordneten Mitfahr-Fahrzeugs an den Benutzer.

8. Verfahren nach einem der obigen Ansprüche, wobei die Anforderung einer Mitfahrgelegenheit ferner eine vom Benutzer angeforderte Abholzeit beinhaltet, und das Verfahren ferner umfasst:
Berücksichtigen der vom Benutzer angeforderten Abholzeit bei der Zuweisung eines Mitfahr-Fahrzeugs für das Abholen des Benutzers.

9. Verfahren nach einem der obigen Ansprüche, ferner umfassend:
dynamisches Auswählen virtueller Bushaltestellen, so dass der Abholort weniger als einen Schwellenabstand vom aktuellen Standort des Benutzers entfernt ist und der Ausstiegsort weniger als einen Schwellenabstand vom gewünschten Ziel des Benutzers entfernt ist.

10. Verfahren nach Anspruch 9, wobei der Schwellenabstand, zumindest teilweise, in Echtzeit basierend auf mindestens einem von einer Wetterbedingung, einer Gesamtsystemanforderung und einer Umwegdauer für andere Benutzer des Mitfahr-Fahrzeugs bestimmt wird.

11. Verfahren nach einem der obigen Ansprüche, ferner umfassend:
dynamisches Zuweisen von Mitfahr-Fahrzeugen an Abholnutzer auf eine Weise, die eine maximale Auslastung der mehreren Mitfahr-Fahrzeuge gewährleistet.

12. Verfahren nach einem der obigen Ansprüche, ferner umfassend:
dynamisches Zuordnen von Mitfahr-Fahrzeugen an Abholnutzer, basierend auf der Vorhersage, dass andere Anforderungen für Mitfahrgelegenheiten von Orten in der Nähe der Fahrtroute des Mitfahr-Fahrzeugs empfangen werden.

13. Verfahren nach einem der obigen Ansprüche, ferner umfassend:
dynamisches Zuweisen von Mitfahr-Fahrzeugen an Abholnutzer in einer Weise, die mindestens einen der folgenden Faktoren für die Servicequalität minimiert:
i) eine erste Zeitspanne, die der einzelne Benutzer im Mitfahr-Fahrzeug verbringt,
ii) eine zweite Zeitspanne, die der einzelne Benutzer mit dem Warten auf die Ankunft des Mitfahr-Fahrzeugs an einer entsprechenden virtuellen Bushaltestelle verbringt,
iii) eine dritte Zeitspanne, die der einzelne Benutzer mit dem Gehen zu einer entsprechenden virtuellen Abhol-Bushaltestelle verbringt, und
iv) eine vierte Zeitspanne, die der einzelne Benutzer mit dem Gehen zu einem jeweils gewünschten Ziel verbringt.

14. System, umfassend:
eine Kommunikationsschnittstelle, die ausgebildet ist, um:
eine Anforderung einer Mitfahrgelegenheit von einer mobilen Kommunikationsvorrichtung eines Benutzers zu empfangen, wobei die Anforderung Informationen beinhaltet, die mit einem aktuellen Standort des Benutzers und einem gewünschten Ziel verbunden sind, und mindestens einen Prozessor, der ausgebildet ist, um das Verfahren eines beliebigen vorhergehenden Anspruchs umzusetzen.

## Revendications

1. Procédé permettant le routage d'un véhicule de covoiturage, ledit procédé comprenant :
la réception d'une demande de covoiturage (110) en provenance d'un dispositif de communication mobile d'un utilisateur, ladite demande comprenant des informations associées à un emplacement actuel de l'utilisateur et à une destination souhaitée ;
l'identification, sur la base des emplacements actuels de multiples véhicules de covoiturage et de la demande reçue, d'un véhicule de covoiturage pour récupérer l'utilisateur (120) ;
le choix, sur la base d'un itinéraire de déplacement actuel du véhicule de covoiturage, des arrêts de bus virtuels pour le véhicule de covoiturage identifié, lesdits arrêts de bus virtuels comprenant un emplacement de récupération et un emplacement de débarquement pour l'utilisateur, et ledit emplacement de l'arrêt de bus virtuel choisi pour récupérer l'utilisateur étant différent de l'emplacement actuel de l'utilisateur (130) ; et
le calcul de l'heure d'arrivée prévue pour l'utilisateur à l'arrêt de bus virtuel choisi pour la récupération de l'utilisateur ;
la calcul d'une heure d'arrivée prévue pour le véhicule de covoiturage à l'arrêt de bus virtuel choisi pour récupérer l'utilisateur ; et
l'attribution du véhicule de covoiturage pour récupérer l'utilisateur si l'heure d'arrivée prévue de l'utilisateur à l'arrêt de bus virtuel choisi pour la récupération de l'utilisateur précède l'heure d'arrivée prévue du véhicule de covoiturage à l'arrêt de bus virtuel choisi pour récupérer l'utilisateur (140) ;
ledit emplacement de l'arrêt de bus virtuel choisi pour la récupération de l'utilisateur étant différent de l'emplacement d'un autre arrêt de bus virtuel choisi pour la récupération d'un autre utilisateur affecté au véhicule de covoiturage.

2. Procédé selon la revendication 1, comprenant en outre :
la réception de données de trafic et la prise en compte du trafic lors du calcul du temps d'arrivée prévue du véhicule de covoiturage.

3. Procédé selon l'une quelconque des revendications précédentes, comprenant en outre :
lorsque le véhicule de covoiturage est attribué à l'utilisateur, la génération d'une première estimation de temps nécessaire au véhicule de covoiturage pour arriver à l'arrêt de bus virtuel choisi pour récupérer l'utilisateur ;
la réception en continu des informations de localisation du véhicule de covoiturage avant l'arrivée à l'arrêt de bus virtuel choisi pour récupérer l'utilisateur, afin de générer une estimation de temps mise à jour nécessaire au véhicule de covoiturage pour arriver à l'arrêt de bus virtuel choisi pour récupérer l'utilisateur ;
l'annulation de l'attribution du véhicule de covoiturage lorsque la différence entre l'estimation de temps mise à jour et la première estimation de temps est supérieure à un seuil prédéfini ; et
l'attribution de nouveau d'un autre véhicule de covoiturage pour récupérer l'utilisateur à l'arrêt de bus virtuel choisi pour récupérer l'utilisateur.

4. Procédé selon l'une quelconque des revendications précédentes, comprenant en outre :
la détermination des directions de déplacement à pied pour l'utilisateur à partir de l'emplacement actuel de l'utilisateur jusqu'à l'arrêt de bus virtuel choisi pour récupérer l'utilisateur ; et
la transmission des directions de déplacement à pied au dispositif de communication mobile de l'utilisateur afin de guider ainsi l'utilisateur jusqu'à l'arrêt de bus virtuel choisi pour récupérer l'utilisateur.

5. Procédé selon l'une quelconque des revendications précédentes, comprenant en outre :
le stockage en mémoire d'une pluralité d'emplacements pré-identifiés pour des arrêts de bus virtuels ; et le choix des arrêts de bus virtuels parmi les emplacements pré-identifiés stockés dans la mémoire.

6. Procédé selon l'une quelconque des revendications précédentes, lesdites informations associées à un emplacement actuel des utilisateurs comprennent des informations GPS ou un emplacement de récupération demandé par l'utilisateur.

7. Procédé selon l'une quelconque des revendications précédentes, comprenant en outre :
la fourniture à l'utilisateur d'au moins deux propositions de covoiturage, chaque proposition de covoiturage comprenant une heure estimée différente pour la récupération ; et
lors de la réception de la sélection entrée provenant de l'utilisateur, l'attribution, à l'utilisateur, d'un véhicule de covoiturage associé à la proposition de covoiturage choisi.

8. Procédé selon l'une quelconque des revendications précédentes, ladite demande de covoiturage comprenant en outre une heure de récupération demandée par l'utilisateur, et ledit procédé comprenant en outre :
la prise en compte de l'heure de récupération demandée par l'utilisateur lors de l'attribution d'un véhicule de covoiturage pour récupérer l'utilisateur.

9. Procédé selon l'une quelconque des revendications précédentes, comprenant en outre :
la sélection de manière dynamique des arrêts de bus virtuels de sorte que l'emplacement de récupération soit à une distance inférieure à une distance seuil de l'emplacement actuel de l'utilisateur et que l'emplacement de débarquement soit à une distance inférieure à une distance seuil de la destination souhaitée de l'utilisateur.

10. Procédé selon la revendication 9, ladite distance seuil étant, au moins partiellement, déterminée en temps réel sur la base d'au moins une condition météorologique, une demande de système globale et une durée de détour pour les autres utilisateurs du véhicule de covoiturage.

11. Procédé selon l'une quelconque des revendications précédentes, comprenant en outre :
l'attribution de façon dynamique des véhicules de covoiturage aux utilisateurs à récupérer de manière à maximiser l'occupation des multiples véhicules de covoiturage.

12. Procédé selon l'une quelconque des revendications précédentes, comprenant en outre :
l'attribution de manière dynamique de véhicules de covoiturage aux utilisateurs à récupérer, sur la base d'une prédiction selon laquelle d'autres demandes de covoiturage seront reçues depuis des emplacements situés à proximité de l'itinéraire de déplacement du véhicule de covoiturage.

13. Procédé selon l'une quelconque des revendications précédentes, comprenant en outre :
l'attribution de manière dynamique des véhicules de covoiturage aux utilisateurs à récupérer de manière à minimiser au moins l'une des qualités suivantes des facteurs de service :
i) une première durée du temps que chaque utilisateur passe dans le véhicule de covoiturage ;
ii) une deuxième durée du temps que chaque utilisateur passe à attendre que le véhicule de covoiturage se rende à un arrêt de bus virtuel respectif ;
iii) une troisième durée du temps que chaque utilisateur passe à marcher jusqu'à un arrêt de bus de récupération virtuel respectif ; et
iv) une quatrième durée du temps que chaque utilisateur passe à marcher pour se rendre à une destination souhaitée respective.

14. Système comprenant :
Une interface de communication conçue pour :
recevoir d'un dispositif de communication mobile d'un utilisateur une demande de covoiturage, ladite demande comprenant des informations associées à un emplacement actuel de l'utilisateur et à une destination souhaitée ; et au moins un processeur configuré pour mettre en oeuvre ledit procédé selon l'une quelconque des revendications précédentes.
